# FASCICULE DE BREVET EUROPEEN

(11) **EP 4 399 446 B1**
(45) Date de publication et mention de la délivrance du brevet: **10.12.2025**
(21) Numéro de dépôt: 22773238.5
(22) Date de dépôt: 07.09.2022
(51) Int. Cl.: F22B 35/00, F22B 35/18, G21D 3/00, G21D 3/08, G21D 3/04

(54) **PROCÉDÉ ET SYSTÈME DE SURVEILLANCE D'UNE CENTRALE NUCLÉAIRE AVEC DÉTECTION ET CARACTÉRISATION D'UN DÉSÉQUILIBRE**
VERFAHREN UND SYSTEM ZUR ÜBERWACHUNG EINER KERNTECHNISCHEN ANLAGE MIT DETEKTION UND CHARAKTERISIERUNG EINER UNWUCHT
METHOD AND SYSTEM FOR MONITORING A NUCLEAR PLANT, WITH DETECTION AND CHARACTERIZATION OF AN IMBALANCE

(30) Priorité: 07.09.2021 FR 2109360
(43) Date de publication de la demande: 17.07.2024
(73) Titulaire: FRAMATOME, 92400 Courbevoie (FR)
(72) Inventeur: FEINGOLD, Jean, 92120 Montrouge (FR)
(74) Mandataire: Lavoix
(86) Numéro de dépôt international: PCT/EP2022/074781
(87) Numéro de publication internationale: WO 2023/036792

(56) Documents cités:
- WO-A1-2011/059990
- FR-A1- 2 431 753
- FR-A1- 3 082 989
- US-A- 4 975 238

## Description

La présente invention concerne le domaine de la surveillance d'une centrale nucléaire.

Une centrale nucléaire possède un circuit d'eau primaire (ou « circuit primaire) et un circuit d'eau secondaire (ou « circuit secondaire ») qui sont séparés, un réacteur nucléaire pour chauffer l'eau circulant dans le circuit primaire, plusieurs générateur(s) de vapeur agencés pour transférer la chaleur du circuit primaire au circuit secondaire et générer de la vapeur dans le circuit secondaire, et une turbine à vapeur intégrée dans le circuit secondaire pour générer de l'énergie mécanique à partir de la vapeur générée par les générateurs de vapeurs. Cette énergie mécanique peut ensuite être convertie en énergie électrique à l'aide d'un générateur électrique couplé à la turbine à vapeur.

Une centrale nucléaire est généralement munie de capteurs mesurant des paramètres de fonctionnement de la centrale nucléaire pris en compte pour surveiller et piloter la centrale nucléaire.

Ces paramètres de fonctionnement sont utilisés par exemple par un système de surveillance configuré pour surveiller et/ou piloter automatiquement la centrale nucléaire.

FR3082989A1 divulgue un procédé de surveillance et de protection d'une centrale nucléaire à eau sous pression, basé sur le calcul, pour chaque générateur de vapeur, d'une puissance primaire représentative de la puissance thermique générée par le réacteur nucléaire et envoyée vers le générateur de vapeur via le circuit primaire et d'une puissance secondaire représentative de la puissance thermique extraite du générateur de vapeur par le circuit secondaire.

Un des buts de l'invention est de proposer un procédé de surveillance d'une centrale nucléaire mis en œuvre par un système de surveillance, qui permette de réaliser une surveillance de manière fiable.

A cet effet, l'invention propose un procédé de surveillance d'une centrale nucléaire mis en œuvre par un système de surveillance, la centrale nucléaire possédant un circuit primaire, un circuit secondaire, un réacteur nucléaire agencé dans le circuit primaire pour chauffer de l'eau circulant dans le circuit primaire, et N générateurs de vapeur agencés pour transférer la chaleur du circuit primaire au circuit secondaire en générant de la vapeur dans le circuit secondaire, N étant un nombre entier égal ou supérieur à 2, le système de surveillance comprenant des capteurs pour la mesure, pour chaque générateur de vapeur, de paramètres d'un jeu de paramètres représentatifs du fonctionnement du générateur de vapeur, le procédé de surveillance comprenant, pour au moins un des paramètres du jeu de paramètres représentatifs, et pour chaque générateur de vapeur :
- la détermination, en fonction des mesures fournies par les capteurs, d'un écart entre une valeur mesurée du paramètre pour ce générateur de vapeur et la valeur moyenne de ce paramètre pour l'ensemble des générateurs de vapeur pour détecter un déséquilibre de ce paramètre sur le générateur de vapeur ; et
- la caractérisation du déséquilibre affectant ce paramètre de ce générateur de vapeur en fonction d'un ou plusieurs autre(s) paramètre(s) du jeu de paramètres représentatifs, de manière à générer un signal de problème physique indicatif de la présence d'un problème physique sur le générateur de vapeur affecté par le déséquilibre ou un signal de dérive de mesure indicatif d'une dérive de la mesure du paramètre considéré sur le générateur de vapeur affecté par le déséquilibre.

La comparaison de la valeur mesurée d'un paramètre d'un générateur de vapeur à la valeur moyenne de ce paramètre pour l'ensemble des générateurs de vapeur permet d'identifier un déséquilibre de ce paramètre sur ce générateur de vapeur.

Un tel déséquilibre peut être dû à un problème physique sur ce générateur de vapeur, i.e. un problème effectivement présent sur ce générateur de vapeur affecté par le déséquilibre, ou à une dérive de la mesure dudit paramètre sur ce générateur de vapeur, i.e. une erreur de mesure d'un capteur dont la mesure détermine la valeur de ce paramètre.

Chaque autre paramètre pris en compte pour la caractérisation d'un déséquilibre détecté sur le paramètre considéré est de préférence un autre paramètre lié audit paramètre considéré et qui devrait en principe aussi être affecté par le déséquilibre.

La caractérisation du déséquilibre sur un paramètre d'un générateur de vapeur en fonction d'un ou plusieurs autre(s) paramètre(s) permet au système de surveillance de générer automatiquement un signal indiquant que le déséquilibre détecté est dû à un problème physique sur le générateur de vapeur ou à une dérive de la mesure de ce paramètre sur ce générateur de vapeur.

La caractérisation du déséquilibre permet ainsi à un opérateur ou au système de surveillance de piloter la centrale nucléaire pour prendre des mesures appropriées suite à la détection d'un déséquilibre, selon qu'il s'agit d'un problème physique ou d'une dérive de mesure.

En cas de caractérisation d'un problème physique, la centrale nucléaire peut être pilotée pour compenser le problème physique ou passer la centrale nucléaire dans un mode de fonctionnement permettant de corriger le problème physique. En cas de caractérisation d'une dérive de mesure, il est possible de corriger la mesure réalisée ou d 'effectuer la maintenance (réparation ou changement) du ou des équipement(s) défectueux dans un état en puissance ou à l'arrêt de la tranche.

Selon des modes de mis en œuvre particuliers, le procédé de surveillance comprend une ou plusieurs des caractéristiques optionnelles suivantes, prises individuellement ou selon toutes les combinaisons techniquement possibles :
- pour au moins un des paramètres du jeu de paramètres représentatifs, la caractérisation d'un déséquilibre du paramètre est réalisée en fonction, pour au moins un ou chacun dudit ou desdits autre(s) paramètre(s), d'un écart entre une valeur mesurée de cet autre paramètre pour le générateur de vapeur considéré et une valeur de référence de cet autre paramètre pour l'ensemble des générateurs de vapeur, la valeur de référence étant choisie parmi une valeur moyenne de cet autre paramètre et une valeur de consigne de cet autre paramètre ;
- le procédé de surveillance comprend la comparaison d'au moins un ou de chaque écart entre une valeur mesurée et une valeur de référence d'un paramètre à un ou plusieurs seuil(s) de comparaison, pour détecter un déséquilibre sur ce paramètre ou pour détecter un déséquilibre sur un autre paramètre, la valeur de référence étant choisie parmi une valeur moyenne et une valeur de consigne de ce paramètre, la valeur de référence étant choisie parmi une valeur moyenne et une valeur de consigne du paramètre concerné ;
- pour au moins un des paramètres du jeu de paramètres représentatifs, la caractérisation du déséquilibre du paramètre sur le générateur de vapeur considéré comprend :
   - l'émission d'un signal de problème physique si l'écart calculé pour ce paramètre est inférieur à un seuil inférieur associé à ce paramètre ou supérieur à un seuil supérieur associé à ce paramètre, et si l'écart entre la valeur mesurée et une valeur de référence de cet autre paramètre du jeu de paramètres représentatifs, choisie de préférence parmi la valeur moyenne calculée pour cet autre paramètre et une valeur de consigne de cet autre paramètre, optionnellement filtré à l'aide d'un filtre à avance de phase, est inférieur à un seuil inférieur associé à cet autre paramètre ou supérieur à un seuil supérieur associé à cet autre paramètre ; et/ou
   - l'émission d'un signal de dérive de mesure si l'écart calculé pour ce paramètre est inférieur à un seuil inférieur associé à ce paramètre ou supérieur à un seuil supérieur associé à ce paramètre, et si l'écart entre la valeur mesurée et une valeur de référence de d'un autre paramètre du jeu de paramètres représentatifs, choisie de préférence parmi la valeur moyenne calculée pour ledit autre paramètre et un valeur de consigne dudit autre paramètre, optionnellement filtré à l'aide d'un filtre à avance de phase, n'est pas inférieur au seuil inférieur associé à cet autre paramètre ni supérieur au seuil supérieur associé à cet autre paramètre ;
   - pour chaque générateur de vapeur, et pour au moins un des paramètres du jeu de paramètres représentatifs, la caractérisation d'un déséquilibre de ce paramètre sur ce générateur de vapeur comprend :
      - l'émission d'un premier signal de problème physique si l'écart entre la valeur mesurée et la valeur moyenne calculée pour ce paramètre est inférieur à un seuil inférieur négatif et si l'écart entre la valeur mesurée et une valeur de référence d'un autre paramètre du jeu de paramètres représentatifs, choisie de préférence parmi la valeur moyenne calculée pour cet autre paramètre et une valeur de consigne de cet autre paramètre, éventuellement filtré à l'aide d'un filtre à avance de phase, est inférieur à un seuil inférieur négatif ;
      - l'émission d'un premier signal de dérive de mesure si l'écart entre la valeur mesurée et la valeur moyenne calculée pour ce paramètre est inférieur au seuil inférieur négatif et si l'écart entre la valeur mesurée et la valeur de référence pour l'autre paramètre, éventuellement filtrée à l'aide d'un filtre à avance de phase, n'est pas inférieur au seuil inférieur négatif ;
      - l'émission d'un deuxième signal de problème physique si l'écart entre la valeur mesurée et la valeur moyenne calculée pour ce paramètre est supérieur à un seuil supérieur positif et si l'écart entre la valeur mesurée et la valeur de référence pour l'autre paramètre, éventuellement filtré à l'aide d'un filtre à avance de phase, est supérieur à un seuil supérieur positif ; et/ou
      - l'émission d'un deuxième signal de dérive de mesure si l'écart entre la valeur mesurée et la valeur moyenne calculée pour ce paramètre est supérieur à un seuil supérieur positif et si l'écart entre la valeur mesurée et la valeur de référence pour l'autre paramètre, éventuellement filtré à l'aide d'un filtre à avance de phase, n'est pas supérieur au seuil supérieur positif.
   - pour chaque générateur de vapeur et pour au moins un des paramètres du jeu de paramètres représentatifs, l'émission d'un signal d'alarme si l'écart entre la valeur mesurée et la une valeur de référence est inférieur un seuil d'alarme inférieur et/ou l'émission d'un signal d'alarme si l'écart entre la valeur mesurée et la valeur de référence est supérieur un seuil d'alarme supérieur, la valeur de référence étant choisie parmi une valeur moyenne de ce paramètre et une valeur de consigne de ce paramètre ;
   - l'écart entre la valeur mesurée et la valeur de référence est filtré à l'aide d'un filtre à avance de phase avant d'être comparé au seuil d'alarme inférieur et/ou avant d'être comparé au seuil d'alarme supérieur ;
   - la caractérisation d'un déséquilibre sur au moins un ou chacun des paramètres du jeu de paramètres représentatifs comprend la prise en compte d'un signal d'alarme émis pour un autre paramètre du jeu de paramètres représentatifs ;
   - pour chaque générateur de vapeur et pour au moins un des paramètres du jeu de paramètres représentatifs, l'émission d'un signal d'écart si l'écart entre la valeur mesurée et une valeur de référence de ce paramètre est inférieur un seuil d'écart inférieur et/ou l'émission d'un signal d'écart si l'écart entre la valeur mesurée et la valeur de référence de ce paramètre est supérieur un seuil d'écart supérieur, la valeur de référence étant choisie parmi une valeur moyenne de ce paramètre et une valeur de consigne de ce paramètre ;
   - la caractérisation d'un déséquilibre d'au moins un des paramètres d'un générateur de vapeur est réalisée en fonction d'un signal d'écart émis pour ce paramètre et d'un signal d'alarme ou d'écart émis pour au moins un autre paramètre pris en compte pour la caractérisation ;
   - pour chaque générateur de vapeur, le jeu de paramètres représentatifs comprend un ou plusieurs des paramètres suivants : le débit de vapeur, la pression de vapeur, le débit d'eau alimentaire, le température d'eau alimentaire, le débit de purge, le niveau d'eau à l'état liquide et la puissance primaire ;
   - la caractérisation d'un déséquilibre sur la pression de vapeur d'un générateur de vapeur est réalisée par exemple en fonction du débit de vapeur et de la puissance primaire, en particulier en fonction d'un écart entre le débit de vapeur mesuré de ce générateur de vapeur et le débit de vapeur moyen des générateurs de vapeur et d'un écart entre la puissance primaire mesurée de ce générateur de vapeur et la puissance primaire moyenne pour l'ensemble des générateurs de vapeur ;
   - la caractérisation d'un déséquilibre sur le débit de vapeur d'un générateur de vapeur est réalisée en fonction par exemple de la pression de vapeur et de la puissance primaire, en particulier en fonction d'un écart entre la pression de vapeur mesurée de ce générateur de vapeur et la pression de vapeur moyenne de l'ensemble des générateurs de vapeur et d'un écart entre la puissance primaire mesurée de ce générateur de vapeur et la puissance primaire moyenne des générateurs de vapeur ;
   - la caractérisation d'un déséquilibre sur la température d'eau alimentaire d'un générateur de vapeur est réalisée par exemple en fonction de la puissance primaire, en particulier en fonction d'un écart entre la puissance primaire mesurée de ce générateur de vapeur et la puissance primaire moyenne de l'ensemble des générateurs de vapeur ;
   - la caractérisation d'un déséquilibre sur le débit d'eau alimentaire d'un générateur de vapeur est réalisée par exemple en fonction du niveau d'eau de ce générateur de vapeur, en particulier en fonction d'un écart entre un niveau d'eau mesuré de ce générateur de vapeur et une consigne de niveau d'eau ;
   - la caractérisation d'un déséquilibre sur le débit de purge d'un générateur de vapeur est réalisée en fonction du débit d'eau alimentaire de ce générateur de vapeur, en particulier en fonction d'un écart entre le débit d'eau alimentaire mesuré de ce générateur de vapeur et le débit d'eau alimentaire moyen de l'ensemble des générateurs de vapeur ;

L'invention concerne aussi un système de surveillance d'une centrale nucléaire comprenant des capteurs pour la mesure, pour chaque générateur de vapeur des paramètres du jeu de paramètres représentatifs, et une unité électronique de surveillance configurée pour le mise en œuvre d'un procédé de surveillance tel que défini ci-dessus à partir des mesures fournies par les capteurs.

L'invention concerne encore un produit programme d'ordinateur enregistrable sur une mémoire ou un support de données informatique et exécutable par un processeur ou un ordinateur, le produit programme d'ordinateur comprenant des instructions de code logiciel pour la mise en œuvre d'un procédé de surveillance tel que défini ci-dessus.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique d'une centrale nucléaire possédant un système de surveillance configuré pour la mise en œuvre d'un procédé de surveillance ;
- la Figure 2 est une schéma bloc illustrant des étapes du procédé de surveillance ; et
- les Figures 3 à 6 illustrent une unité électronique de surveillance du système de surveillance, configurée pour la mise en œuvre du procédé de surveillance.

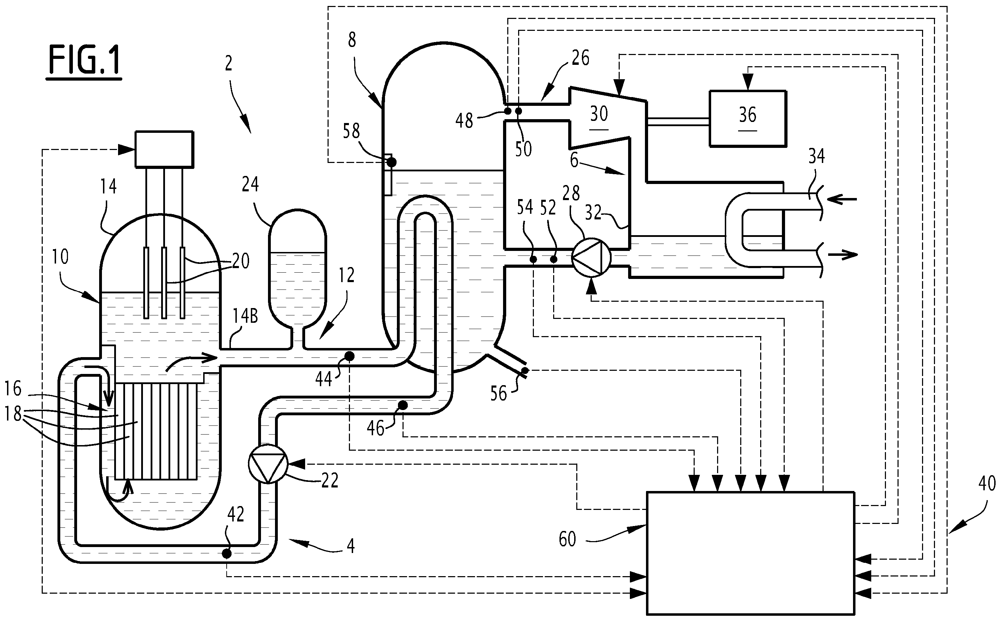

La centrale nucléaire 2 illustrée sur la Figure 1 comprend un circuit primaire 4 pour la circulation d'eau et un circuit secondaire 6 pour la circulation d'eau, le circuit primaire 4 et le circuit secondaire 6 étant séparés et couplés thermiquement par l'intermédiaire de N générateur(s) de vapeur 8, N étant un nombre entier égal ou supérieur à 2. N est par exemple égal à 4.

Un seul générateur de vapeur 8 est représenté sur la Figure 1 pour des raisons de simplification des dessins.

Chaque générateur de vapeur 8 est disposé entre le circuit primaire 4 et le circuit secondaire 6 et configuré pour un échange de chaleur entre l'eau du circuit primaire 4 et l'eau du circuit secondaire 6.

En fonctionnement, chaque générateur de vapeur 8 permet de générer de la vapeur dans le circuit secondaire 6, dans lequel le générateur de vapeur 8 est alimenté en entrée avec de l'eau à l'état liquide et fournit en sortie de l'eau à l'état gazeux, i.e. de la vapeur d'eau.

Le circuit primaire 4 comprend un réacteur nucléaire 10 pour chauffer l'eau circulant dans le circuit primaire 4.

La centrale nucléaire 2 est par exemple une centrale nucléaire à eau sou pression, auquel cas le réacteur nucléaire 10 est un réacteur nucléaire à eau sous pression (ou PWR pour « Pressurized Water Reactor ») ou une centrale nucléaire à eau bouillante, auquel cas le réacteur nucléaire 10 est un réacteur nucléaire à eau bouillante (ou BWR pour « Boiling Water Reactor »).

Le circuit primaire 4 comprend N boucle(s) primaire(s) 12 fluidiques, chaque boucle primaire 12 reliant fluidiquement le réacteur nucléaire 10 à un générateur de vapeur 8 respectif.

Le réacteur nucléaire 10 comprend une cuve de réacteur 14 et un cœur 16 formé d'une pluralité d'assemblages de combustible nucléaire 18 disposés côte-à-côte dans la cuve de réacteur 14.

Le réacteur nucléaire 10 comprend des grappes de commande 20 pouvant être descendues dans le ou remontées hors du cœur de réacteur 16 pour contrôler la réactivité du réacteur nucléaire 10. Les grappes de commande 20 comprennent par exemple des grappes de contrôle pouvant être sélectivement insérées dans le cœur 16 pour diminuer la réactivité ou extraites du cœur 16 pour augmenter la réactivité, et des grappes d'arrêt pouvant être lâchées dans le cœur 16 pour provoquer un arrêt automatique du réacteur nucléaire 10.

Chaque boucle primaire 12 relie la cuve de réacteur 14 à un générateur de vapeur 8 respectif. Chaque boucle primaire 12 comprend une pompe primaire 22 respective pour forcer la circulation de l'eau à l'intérieur de cette boucle primaire 12.

Lorsque la centrale nucléaire 2 est une centrale nucléaire à eau pressurisée, le circuit primaire 4 comprend un pressuriseur 24 configuré pour maintenir, dans le circuit primaire 4, une pression suffisante pour que l'eau circulant dans le circuit primaire 4 reste à l'état liquide.

Le pressuriseur 24 est relié fluidiquement à une branche chaude d'une boucle primaire 12, i.e. une branche dans laquelle le fluide circule du réacteur nucléaire 10 vers le générateur de vapeur 8 situé sur cette boucle primaire 12.

Le circuit secondaire 6 comprend N boucles secondaires 26, chaque boucle secondaire 26 étant associée à une boucle primaire 12 respective. Chaque générateur de vapeur 8 est interposé entre une boucle primaire 12 et la boucle secondaire 26 associée.

Le circuit secondaire 6 comprend une ou plusieurs pompe(s) secondaire(s) 28 pour forcer la circulation de l'eau à l'intérieur du circuit secondaire 6. Le circuit secondaire 6 comprend par exemple un pompe secondaire 28 respective dans chaque boucle secondaire 26. En variante, une ou plusieurs pompe(s) secondaire(s) 28 alimentent l'ensemble des boucles secondaires 26.

Le circuit secondaire 6 comprend une turbine 30 configurée pour convertir l'énergie thermique contenue dans de la vapeur circulant dans le circuit secondaire 6 en énergie mécanique.

Une entrée de la turbine 30 est reliée aux boucles secondaires 26 par l'intermédiaire d'un collecteur d'entrée (ou « barillet ») (non représenté) configuré pour collecter la vapeur produite par les générateurs de vapeur 8 et fournir la vapeur ainsi collectée à la turbine 30.

Le circuit secondaire 6 comprend un condenseur 32 configuré pour refroidir notamment la vapeur sortant de la turbine 30, et éventuellement de la vapeur sortant du groupe de contournement vapeur (non représenté), et ramener l'eau à l'état liquide avant de renvoyer l'eau à l'état liquide vers les générateurs de vapeur 8 via les boucles secondaires 26.

Le groupe de contournement vapeur est une partie du circuit permettant de contourner (ou « by-passer ») la turbine 30 entre un collecteur de vapeur (non représenté) prévu pour collecter la vapeur provenant de la pluralité de générateur de vapeur 8 et le condenseur 32, en fonction du débit de vapeur souhaité à travers la turbine 30.

Une sortie du condenseur 32 est reliée aux boucles secondaires 26 par l'intermédiaire d'un collecteur de sortie (non représenté) configuré pour distribuer l'eau sortant du condenseur 32 vers les différentes boucles secondaires 26.

Chaque condenseur 32 est par exemple disposé sur le circuit secondaire 6 en étant configuré pour un échange de chaleur entre l'eau du circuit secondaire 6 et de l'eau circulant dans un circuit de refroidissement 34.

La centrale nucléaire 2 comprend une génératrice électrique 36 couplée mécaniquement à une turbine 30 de manière à générer de l'énergie électrique à partir de l'énergie mécanique générée par cette turbine 30. L'énergie électrique est par exemple fournie à un réseau de distribution d'électricité.

La centrale nucléaire 2 comprend un système de surveillance 40 configuré pour la surveillance automatique de la centrale nucléaire 2, en particulier pour la mise en œuvre d'un procédé de surveillance de la centrale nucléaire 2

Le système de surveillance 40 comprend des capteurs pour mesurer des paramètres de fonctionnement de la centrale nucléaire 2, et en particulier des paramètres représentatifs du fonctionnement de chaque générateur de vapeur 8.

Les capteurs comprennent par exemple, pour chaque générateur de vapeur 8 :
- un capteur de débit d'eau primaire 42 pour mesurer le débit d'eau Q1 dans la boucle primaire 12 dans laquelle est situé ce générateur de vapeur 8 ;
- un capteur de température d'eau entrante 44 pour mesurer la température d'eau dans la branche chaude TC, i.e. la température de l'eau dans la branche chaude de la boucle primaire 12 conduisant l'eau du réacteur 10 vers le générateur de vapeur 8 ;
- un capteur de température d'eau sortante 46 pour mesurer la température d'eau dans la branche froide TF, i.e. la température de l'eau dans la branche froide de la boucle primaire 12 conduisant l'eau du générateur de vapeur 8 vers le réacteur nucléaire 10 ;
- un capteur de pression de vapeur 48 pour mesurer la pression de vapeur PV, i.e. la pression de la vapeur à la sortie du générateur de vapeur 8 dans la boucle secondaire 26 dans laquelle est situé ce générateur de vapeur 8 ;
- un capteur de débit de vapeur 50 pour mesurer le débit de vapeur DV, i.e. le débit de vapeur à la sortie du générateur de vapeur 8 dans la boucle secondaire 26 dans laquelle est situé ce générateur de vapeur 8 ;
- un capteur de température d'eau alimentaire 52 pour mesurer la température d'eau alimentaire TE, i.e. la température de l'eau à l'état liquide arrivant au générateur de vapeur 8 dans la boucle secondaire 26 dans laquelle est situé ce générateur de vapeur 8 ;
- un capteur de débit d'eau alimentaire 54 pour mesurer le débit d'eau alimentaire DE, i.e. le débit de l'eau à l'état liquide arrivant au générateur de vapeur 8 dans la boucle secondaire 26 dans laquelle est situé ce générateur de vapeur 8 ;
- un capteur de débit de purge 56 pour mesurer le débit de purge DP du générateur de vapeur 8. Le débit de purge DP est un débit d'eau à l'état liquide extrait du côté secondaire du générateur de vapeur 8. Ce débit de purge DP est relativement faible, en particulier comparativement au débit de vapeur extrait du générateur de vapeur 8 ;
- un capteur de niveau d'eau 58 pour mesurer le niveau de l'eau à l'état liquide NV dans le générateur de vapeur 8, du côté de la boucle secondaire 26.

On notera que dans la demande de brevet, sauf stipulation contraire, le terme « débit » est utilisé pour faire référence au débit massique d'un fluide.

Le système de surveillance 40 comprend une unité électronique de surveillance 60 configurée pour surveiller la centrale nucléaire 2 en mettant en œuvre le procédé de surveillance.

L'unité électronique de surveillance 60 est par exemple configurée pour recevoir des signaux de mesure fournis par les capteurs disposés sur la centrale nucléaire 2 et représentatifs du fonctionnement de chaque générateur de vapeur 8, à savoir, respectivement pour chaque générateur de vapeur 8, le capteur de débit d'eau primaire 42, le capteur de température d'eau entrante 44 , le capteur de température d'eau sortante 46, le capteur de pression de vapeur 48, le capteur de débit de vapeur 50, le capteur de température d'eau alimentaire 52, le capteur de débit d'eau alimentaire 54, le capteur de débit de purge 56 et/ou le capteur de niveau d'eau 58.

L'unité électronique de surveillance 60 est par exemple configurée, pour chaque générateur de vapeur, pour la détection d'un déséquilibre sur au moins un paramètre de ce générateur de vapeur 8 en comparant la valeur mesurée de ce paramètre pour ce générateur de vapeur 8 à la valeur moyenne de ce paramètre pour l'ensemble des générateurs de vapeur, et la caractérisation d'un tel déséquilibre en fonction d'au moins un autre paramètre de fonctionnement du générateur de vapeur 8 avec l'émission d'un signal de problème physique et d'un signal de dérive de mesure, en fonction des signaux de mesure reçu par l'unité électronique de surveillance 60.

L'unité électronique de surveillance 60 est de préférence configurée pour l'émission de signaux d'alarme et de signaux d'écart, de préférence de manière qu'ils soient perceptibles par un opérateur humain et/ou, optionnellement, pour la commande automatique du circuit primaire 4 et/ou du circuit secondaire 6, en fonction de la détection d'un déséquilibre sur un paramètre d'un générateur de vapeur par rapport à la valeur moyenne de ce paramètre sur l'ensemble des générateurs de vapeur 8.

L'unité électronique de surveillance 60 est par exemple configurée pour commander les grappes de commande 20 pour ajuster ou vérifier la réactivité du réacteur nucléaire, pour commander chaque pompe primaire 22 pour ajuster ou vérifier le débit d'eau dans chaque boucle primaire 12 du circuit primaire 4, pour commander chaque pompe secondaire 28 pour ajuster ou vérifier le débit d'eau et/ou la température d'eau dans chaque boucle secondaire 26 du circuit secondaire 6, pour commander chaque turbine 30 et/ou pour commander chaque génératrice 36, pour ajuster ou vérifier le débit de vapeur et/ou la pression vapeur dans chaque boucle 26 du circuit secondaire 6.

L'unité électronique de surveillance 60 comprend par exemple une unité de traitement d'information comprenant un processeur, une mémoire et produit programme d'ordinateur, i.e. une ou plusieurs application(s) logicielle(s), enregistrable sur la mémoire ou sur un support de données informatique et contenant des instructions de code logiciel exécutables par le processeur lorsque qu'elle(s) est(sont) enregistrée(s) sur la mémoire. En variante ou en option, l'unité électronique de surveillance 60 comprend par exemple un circuit logique programmable (par ex. un réseau de portes programmables *in situ*) et/ou un circuit intégré.

Dans le cas d'un produit programme d'ordinateur, celui-ci contient des instructions de code logicielles pour la mise en œuvre du procédé de surveillance.

Le procédé de surveillance est de préférence mis en œuvre en régime permanent de fonctionnement de la centrale nucléaire 2, i.e. pendant une période pendant laquelle la puissance générée par le réacteur nucléaire 10 est stabilisée.

En fonctionnement, chaque générateur de vapeur 8 reçoit une puissance primaire P1 du circuit primaire 4, extrait une puissance secondaire P2 vers le circuit secondaire 6, et apporte une puissance transférée PS au circuit secondaire 6.

Pour chaque générateur de vapeur 8, la puissance primaire P1 fournie par le circuit primaire 4 à ce générateur de vapeur 8 est fonction du débit d'eau Q1 dans la boucle primaire 12 alimentant ce générateur de vapeur 8, de la température de l'eau dans la branche chaude TC de la boucle primaire 12, et de la température de l'eau dans la branche froide TF de la boucle primaire 12.

Pour chaque générateur de vapeur 8, la puissance primaire P1 est par exemple calculable selon l'équation P1 = K1*Q1*(TC - TF) où Q1 est le débit d'eau mesuré dans la boucle primaire, TC est la température de l'eau dans la branche chaude de la boucle primaire, TF est la température de l'eau dans la branche froide de la boucle primaire, et K1 est un coefficient de proportionnalité.

En régime permanent, la puissance secondaire P2 et la puissance transférée PS sont sensiblement égales, et, pour chaque générateur de vapeur 8, la puissance secondaire P2 est déterminée par exemple par l'équation P2 = DV*HV + DP*HP - DE*HE, où DV est le débit de vapeur sortant du générateur de vapeur, HV est l'enthalpie de la vapeur sortant du générateur de vapeur, qui est fonction de la pression et de la température de vapeur à la sortie du générateur de vapeur, DE est le débit d'eau alimentaire, i.e. le débit d'eau entrant à l'état liquide dans le générateur de vapeur 8 dans le circuit secondaire 6, HE est l'enthalpie d'eau alimentaire qui est fonction de la pression et de la température d'eau alimentaire TE, i.e. de la pression et de la température de l'eau à l'état liquide entrant dans le générateur de vapeur 8, DP est le débit de purge, HP est l'enthalpie de purge.

En régime permanent, pour chaque générateur de vapeur 8, le débit d'eau alimentaire DE est égal à la somme du débit de vapeur DV et du débit de purge DP, et l'équation suivante est donc respectée : DV + DP = DE.

Par ailleurs, chaque générateur de vapeur 8 présente un niveau d'eau à l'état liquide NV qui doit de préférence suivre un niveau d'eau de consigne NVcons.

Pour chaque générateur de vapeur 8, un jeu de paramètres représentatifs du fonctionnement de ce générateur de vapeur 8 comprend un ou plusieurs des paramètres suivants : le débit de vapeur DV, la pression de vapeur PV, le débit d'eau alimentaire DE, le température d'eau alimentaire TE, le débit de purge DP, le niveau d'eau à l'état liquide NV et la puissance primaire P1.

Pour chaque générateur de vapeur 8, la valeur de chaque paramètre est fonction de la ou des mesure(s) fournies par un ou plusieurs capteur(s) de mesure parmi les capteurs de mesure de la centrale nucléaire 2, à savoir, respectivement pour chaque générateur de vapeur 8, le capteur de débit d'eau primaire 42, le capteur de température d'eau entrante 44, le capteur de température d'eau sortante 46 de la boucle primaire 12 dans laquelle se situe le générateur de vapeur 8, le capteur de pression de vapeur 48, le capteur de débit de vapeur 50, le capteur de température d'eau alimentaire 52, le capteur de débit d'eau alimentaire 54, le capteur de débit de purge 56 et/ou le un capteur de niveau d'eau 58 de la boucle secondaire 26 dans laquelle se situe le générateur de vapeur 8.

Par la suite, la valeur mesurée d'un paramètre d'un générateur de vapeur correspond à la valeur du paramètre déterminée pour ce générateur de vapeur 8 en fonction de la ou des mesure(s) fournie(s) par un ou plusieurs capteur(s) de mesure parmi les capteurs de mesure de la centrale nucléaire 2.

En outre, la valeur moyenne d'un paramètre est la moyenne des valeurs mesurées de ce paramètre pour l'ensemble des générateurs de vapeur 8.

Pour chaque paramètre, le suffixe « mes » est ajoutée pour désigner la valeur mesurée de ce paramètre pour un générateur de vapeur 8 considéré, et le suffixe « avg » est ajouté pour désigner la valeur moyenne de ce paramètre pour l'ensemble des générateurs de vapeur 8.

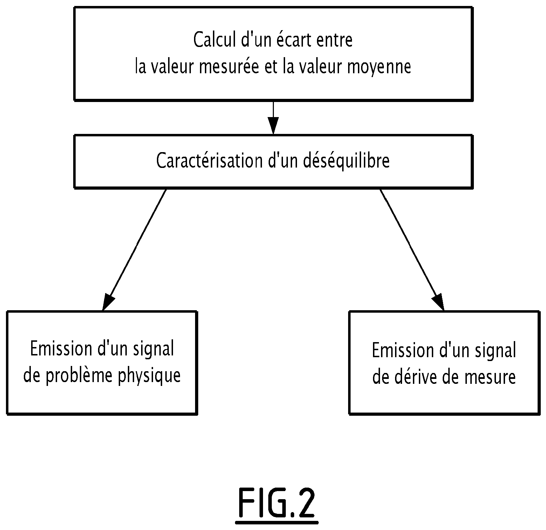

Comme illustré sur la Figure 2, le procédé de surveillance comprend, pour au moins un paramètre parmi les paramètres du jeu de paramètres représentatifs, et pour chaque générateur de vapeur 8 :
- le calcul d'un écart comme la différence entre la valeur mesurée de ce paramètre pour ce générateur de vapeur 8 et la valeur moyenne de ce paramètre pour l'ensemble des générateurs de vapeur 8, de manière à détecter un déséquilibre de ce paramètre sur ce générateur de vapeur 8, et
- la caractérisation d'un déséquilibre du paramètre sur le générateur de vapeur 8 en fonction d'un ou plusieurs autres paramètres parmi les paramètres du jeu de paramètres représentatifs, de manière à générer un signal de problème physique indicatif de la présence d'un problème physique sur le générateur de vapeur 8 affecté par le déséquilibre ou d'un signal de dérive de mesure indicatif d'une dérive de la mesure de la valeur du paramètre de fonctionnement sur le générateur de vapeur 8 affecté par le déséquilibre.

Le procédé de surveillance comprend par exemple la comparaison de l'écart entre la valeur mesurée et la valeur moyenne du paramètre à un ou plusieurs seuil(s) de comparaison, pour déterminer une situation de déséquilibre potentiel ou une situation de déséquilibre effectif.

Dans un exemple de réalisation, pour chaque générateur de vapeur 8, et pour au moins un des paramètres du jeu de paramètres représentatifs, la caractérisation d'un déséquilibre de ce paramètre sur ce générateur de vapeur 8 comprend par exemple :
- l'émission d'un signal de problème physique si l'écart entre la valeur mesurée et la valeur moyenne calculée pour ce paramètre est inférieur à un seuil inférieur associé à ce paramètre ou supérieur à un seuil supérieur associé à ce paramètre, et si l'écart entre la valeur mesurée et une valeur de référence d'un autre paramètre du jeu de paramètres représentatifs, optionnellement filtré à l'aide d'un filtre à avance de phase, est inférieur à un seuil inférieur associé à cet autre paramètre ou supérieur à un seuil supérieur associé à cet autre paramètre, la valeur de référence étant de préférence choisie parmi la valeur moyenne calculée pour ledit autre paramètre ou une valeur de consigne dudit autre paramètre ; et/ou
- l'émission d'un signal de dérive de mesure si l'écart entre la valeur mesurée et la valeur moyenne calculée pour ce paramètre est inférieur à un seuil inférieur associé à ce paramètre ou supérieur à un seuil supérieur associé à ce paramètre, et si l'écart entre la valeur mesurée et la valeur de référence d'un autre paramètre du jeu de paramètres représentatifs, optionnellement filtré à l'aide d'un filtre à avance de phase, n'est pas inférieur au seuil inférieur associé à cet autre paramètre ni supérieur au seuil supérieur associé à cet autre paramètre, la valeur de référence étant de préférence choisie parmi la valeur moyenne dudit autre paramètre ou une valeur de consigne dudit autre paramètre.

Une telle caractérisation est réalisée par exemple pour la température d'eau alimentaire TE, la pression de vapeur PV, le débit de vapeur DV et/ou le débit de purge DP.

Un filtre à avance de phase désigne ici un filtre avance-retard configuré pour introduire une avance de phase dans le signal filtré par le filtre.

Dans un exemple de réalisation, pour chaque générateur de vapeur 8, et pour au moins un des paramètres du jeu de paramètres représentatifs, la caractérisation d'un déséquilibre de ce paramètre sur ce générateur de vapeur 8 comprend par exemple :
- l'émission d'un premier signal de problème physique si l'écart entre la valeur mesurée et la valeur moyenne calculée pour ce paramètre est inférieur à un seuil inférieur négatif associé audit paramètre et si l'écart entre la valeur mesurée et une valeur de référence d'un autre paramètre du jeu de paramètres représentatifs, éventuellement filtré à l'aide d'un filtre à avance de phase, est inférieur à un seuil inférieur négatif associé audit autre paramètre, la valeur de référence étant de préférence choisie parmi la valeur moyenne calculée pour ledit autre paramètre ou une valeur de consigne dudit autre paramètre ;
- l'émission d'un premier signal de dérive de mesure si l'écart entre la valeur mesurée et la valeur moyenne calculée pour ce paramètre est inférieur au seuil inférieur négatif associé audit paramètre et si l'écart entre la valeur mesurée et la valeur de référence pour l'autre paramètre, éventuellement filtrée à l'aide d'un filtre à avance de phase, n'est pas inférieur audit seuil inférieur négatif associé audit autre paramètre ;
- l'émission d'un deuxième signal de problème physique si l'écart entre la valeur mesurée et la valeur moyenne calculée pour ce paramètre est supérieur à un seuil supérieur positif associé audit paramètre et si l'écart entre la valeur mesurée et la valeur de référence pour l'autre paramètre, éventuellement filtré à l'aide d'un filtre à avance de phase, est supérieur à un seuil supérieur positif associé audit autre paramètre; et/ou
- l'émission d'un deuxième signal de dérive de mesure si l'écart entre la valeur mesurée et la valeur moyenne calculée pour ce paramètre est supérieur au seuil supérieur positif associé audit paramètre et si l'écart entre la valeur mesurée et la valeur de référence pour l'autre paramètre, éventuellement filtré à l'aide d'un filtre à avance de phase, n'est pas supérieur audit seuil supérieur positif associé audit autre paramètre.

Une telle caractérisation est réalisée par exemple pour le débit d'eau alimentaire DE d'au moins un générateur de vapeur 8, l'autre paramètre pris en compte pour la caractérisation étant le niveau d'eau à l'état liquide NV dans ce générateur de vapeur 8.

En variante ou en complément facultatif, pour chaque générateur de vapeur 8, et pour au moins un des paramètres du jeu de paramètres représentatifs, la caractérisation d'un déséquilibre de ce paramètre sur ce générateur de vapeur 8 comprend par exemple :
- l'émission d'un premier signal de problème physique si l'écart entre la valeur mesurée et la valeur moyenne calculée pour ce paramètre est inférieur à un seuil inférieur négatif associé audit paramètre et si l'écart entre la valeur mesurée et une valeur de référence pour un autre paramètre du jeu de paramètres représentatifs, éventuellement filtré à l'aide d'un filtre à avance de phase, est supérieur à un seuil supérieur positif associé audit autre paramètre, la valeur de référence étant de préférence choisie parmi la valeur moyenne calculée pour ledit autre paramètre ou une valeur de consigne dudit autre paramètre ;
- l'émission d'un premier signal de dérive de mesure si l'écart entre la valeur mesurée et la valeur moyenne calculée pour ce paramètre est inférieur audit seuil inférieur négatif associé audit paramètre et si l'écart entre la valeur mesurée et la valeur de référence pour l'autre paramètre, éventuellement filtré à l'aide d'un filtre à avance de phase, n'est pas supérieur audit seuil supérieur positif associé audit autre paramètre ;
- l'émission d'un deuxième signal de problème physique si l'écart entre la valeur mesurée et la valeur moyenne calculée pour ce paramètre est supérieur à un seuil supérieur positif associé audit paramètre et si l'écart entre la valeur mesurée et la valeur de référence pour l'autre paramètre, éventuellement filtré à l'aide d'un filtre à avance de phase, est inférieur à un seuil inférieur négatif associé audit autre paramètre ; et/ou
- l'émission d'un deuxième signal de dérive de mesure si l'écart entre la valeur mesurée et la valeur moyenne calculée pour ce paramètre est supérieur à un seuil supérieur positif et si l'écart entre la valeur mesurée et la valeur de référence de l'autre paramètre, éventuellement filtré à l'aide d'un filtre à avance de phase, n'est pas inférieur audit seuil inférieur négatif.

Dans un exemple de réalisation, le procédé de surveillance comprend l'émission d'un signal d'alarme si l'écart entre la valeur mesurée et une valeur de référence pour ce paramètre, choisie par exemple parmi la valeur moyenne calculée pour ce paramètre ou une valeur de consigne pour ce paramètre, éventuellement filtré à l'aide d'un filtre à avance de phase, est inférieur à un seuil d'alarme inférieur et/ou l'émission d'un signal d'alarme si l'écart entre la valeur mesurée et la valeur de référence de ce paramètre, éventuellement filtré à l'aide d'un filtre à avance de phase, est supérieur à un seuil d'alarme supérieur.

Dans un exemple de réalisation, le procédé de surveillance comprend l'émission d'un signal d'écart si l'écart entre la valeur mesurée et une valeur de référence de ce paramètre, choisie par exemple parmi la valeur moyenne calculé pour ce paramètre ou une valeur de consigne pour ce paramètre, éventuellement filtré à l'aide d'un filtre à avance de phase, est inférieur à un seuil d'écart inférieur et/ou l'émission d'un signal d'écart si l'écart entre la valeur mesurée et la valeur de référence, éventuellement filtré à l'aide d'un filtre à avance de phase, est supérieur à un seuil d'écart supérieur.

Pour une caractérisation d'un déséquilibre utilisant la comparaison d'un écart entre la valeur mesurée et une valeur de référence d'un paramètre (par ex. la valeur moyenne calculée pour ce paramètre ou une valeur de consigne de ce paramètre) à un seuil inférieur et un seuil supérieur (par exemple un seuil négatif et un seuil positif), il est possible d'émettre un même signal d'écart ou un même signal d'alarme dès lors que l'écart entre la valeur mesurée et la valeur de référence est au-dessous du seuil inférieur ou au-dessus du seuil supérieur, ou d'émettre un premier signal d'écart ou un premier signal d'alarme si l'écart est sous le seuil inférieur, et d'émettre un deuxième signal d'écart ou un deuxième signal d'alarme si l'écart et au-dessus du seuil supérieur.

Lors d'une comparaison, l'utilisation d'un filtre à avance de phase appliqué à un écart entre la valeur mesurée et la valeur de référence permet d'anticiper le passage d'un seuil pour cet écart, i.e. le passage au-dessous d'un seuil inférieur ou au-dessus d'un seuil supérieur, en particulier pour en tenir compte dans la caractérisation d'un déséquilibre d'un autre paramètre du jeu de paramètres représentatifs.

En particulier, pour chaque générateur de vapeur 8, et pour au moins un paramètre du jeu de paramètres représentatifs, il est par exemple possible d'utiliser des seuils d'écart pour l'émission d'un signal d'écart utilisé pour la caractérisation du déséquilibre de ce paramètre, et des seuils d'alarme pour l'émission d'un signal d'alarme utilisé pour la détection d'un déséquilibre d'un autre paramètre du générateur de vapeur et la caractérisation du déséquilibre dudit paramètre.

Pour un même paramètre, chaque seuil d'écart est de préférence supérieur ou égal, en valeur absolue, au seuil d'alarme correspondant.

Ainsi, un écart de faible valeur d'un paramètre d'un générateur de vapeur peut déclencher l'émission d'un signal d'alarme utilisable pour caractériser un déséquilibre entrainant un écart de grande valeur sur un autre paramètre du générateur de vapeur.

L'écart de faible valeur de ce paramètre ne nécessite pas forcément l'émission d'un signal de problème physique ou d'un signal de dérive pour ce paramètre, mais peut permettre de caractériser un déséquilibre sur l'autre paramètre, pour décider si l'écart sur cet autre paramètre est lié à un problème physique ou à une dérive de mesure.

Dans un exemple de réalisation, pour chaque générateur de vapeur 8, la caractérisation d'un déséquilibre sur un paramètre est par exemple réalisée en fonction d'un ou plusieurs signaux d'alarme et/ou d'un ou plusieurs signaux d'écart émis pour ce paramètre et pour chaque autre paramètre pris en considération pour la détection d'un déséquilibre potentiel sur le paramètre considéré, selon les conditions indiquées auparavant, et par exemple à l'aide de portes logiques (porte(s) « ou », porte(s) « et », porte(s) inverseuse(s)) ou de tables de vérités ou d'instructions de code logiciel codant les conditions indiquées auparavant.

Le jeu de paramètres représentatifs du fonctionnement d'un générateur de vapeur 8 comprend par exemple la puissance primaire P1 qui est fonction, pour chaque générateur de vapeur 8, du débit d'eau Q1 dans la boucle primaire 12, de la température de l'eau dans la branche froide TF de la boucle primaire 12 et de la température de l'eau dans la branche chaude TC de la boucle primaire 12.

Dans un exemple de réalisation, la puissance primaire P1 est utilisée pour la caractérisation d'un déséquilibre d'au moins un autre paramètre parmi les paramètres du jeu de paramètres représentatifs.

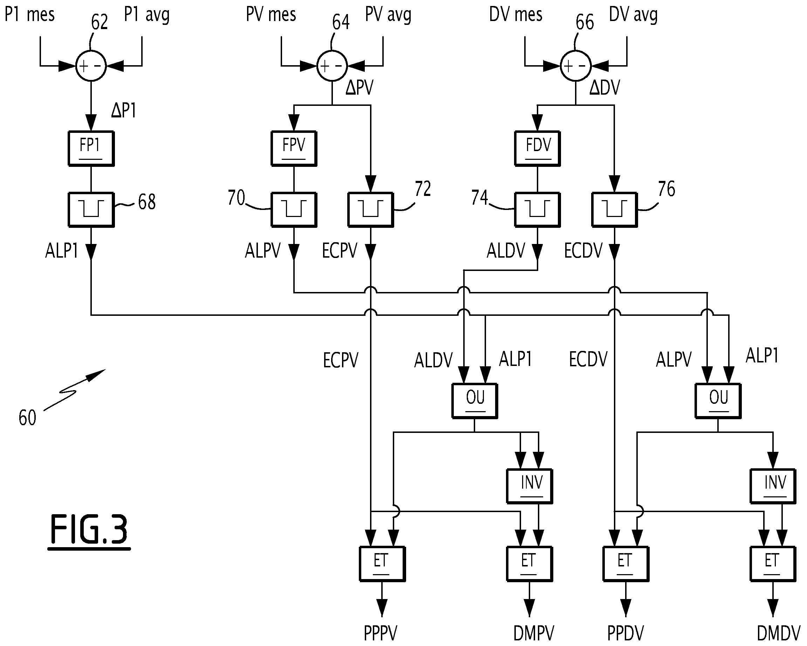

Le procédé de surveillance comprend alors, comme illustré sur la Figure 3, pour chaque générateur de vapeur 8, le calcul d'une puissance primaire mesurée P1mes en fonction du débit d'eau mesuré Q1mes, de la température de l'eau dans la boucle froide mesurée TFmes et de la température de l'eau dans la branche chaude mesurée TCmes (selon la formule de calcul de la puissance primaire indiquée plus haut), et le calcul d'une puissance primaire moyenne P1avg comme la moyenne des puissances primaires mesurées P1mes.

Pour chaque générateur de vapeur 8, le procédé de surveillance comprend le calcul d'un écart de puissance primaire ΔP1 comme la différence entre la puissance primaire mesurée P1mes pour ce générateur de vapeur 8 et la puissance primaire moyenne P1avg.

Pour chaque générateur de vapeur 8, le procédé de surveillance comprend la génération d'un signal d'alarme de puissance primaire ALP1 si l'écart de puissance primaire ΔP1, optionnellement après filtrage à l'aide d'un filtre à avance de phase de puissance primaire FP1, passe au-dessous d'un seuil d'alarme inférieur de puissance primaire SALP1inf ou passe au-dessus d'un seuil d'alarme supérieur de puissance primaire SALP1sup.

Dans un exemple de mise en œuvre, le procédé de surveillance comprend, pour chaque générateur de vapeur 8, le calcul d'un écart de pression de vapeur ΔPV comme la différence entre la pression de vapeur mesurée PVmes pour ce générateur de vapeur 8 et la pression de vapeur moyenne PVavg pour l'ensemble des générateurs de vapeur 8, et le calcul d'un écart de débit de vapeur ΔDV comme la différence entre le débit de vapeur mesuré DVmes de ce générateur de vapeur 8 et le débit de vapeur moyen DVavg pour l'ensemble des générateurs de vapeur 8.

Pour chaque générateur de vapeur 8, la caractérisation d'un déséquilibre sur la pression de vapeur PV sur ce générateur de vapeur 8 comprend par exemple :
- l'émission d'un signal de problème physique de pression de vapeur PPPV si l'écart de pression de vapeur ΔPV de ce générateur de vapeur 8 est inférieur à un seuil inférieur d'écart de pression de vapeur SECPVinf ou supérieur à un seuil supérieur d'écart de pression de vapeur SECPVsup , et, en outre, si l'écart de débit de vapeur ΔDV de ce générateur de vapeur 8, optionnellement filtré à l'aide d'un filtré à avance de phase de débit de vapeur FDV, est inférieur à un seuil inférieur d'alarme de débit de vapeur SALDVinf ou supérieur à un seuil supérieur d'alarme de débit de vapeur SALDVsup ou si l'écart de puissance primaire ΔP1 de ce générateur de vapeur 8, optionnellement filtré à l'aide d'un filtré à avance de phase de puissance primaire FP1, est inférieur à un seuil inférieur d'alarme de puissance primaire SALP1inf ou supérieur à un seuil supérieur d'alarme de puissance primaire SALP1sup ; et/ou
- l'émission d'un signal de dérive de mesure de pression de vapeur DMPV si l'écart de pression de vapeur ΔPV de ce générateur de vapeur 8 est inférieur au seuil inférieur d'écart de pression de vapeur SECPVinf ou supérieur au seuil supérieur d'écart de pression de vapeur SECPVsup, et, en outre, si l'écart de débit de vapeur ΔDV de ce générateur de vapeur 8, optionnellement filtré à l'aide d'un filtré à avance de phase de débit de vapeur FDV, n'est pas inférieur au seuil inférieur d'alarme de débit de vapeur SALDVinf ni supérieur au seuil supérieur d'alarme de débit de vapeur SALDVsup et si l'écart de puissance primaire ΔP1 de ce générateur de vapeur 8, optionnellement filtré à l'aide du filtre à avance de phase de puissance primaire FP1, n'est pas inférieur au seuil inférieur d'alarme de puissance primaire SALP1inf ni supérieur au seuil supérieur d'alarme de puissance primaire SALP1sup.

Pour chaque générateur de vapeur 8, la caractérisation d'un déséquilibre sur le débit de vapeur DV sur ce générateur de vapeur 8 comprend par exemple :
- l'émission d'un signal de problème physique de débit de vapeur PPDV si l'écart de débit de vapeur ΔDV de ce générateur de vapeur 8 est inférieur à un seuil inférieur d'écart de débit de vapeur SECDVinf ou supérieur à un seuil supérieur d'écart de débit de vapeur SECDVsup, et, en outre, si l'écart de pression de vapeur ΔPV de ce générateur de vapeur 8, optionnellement filtré à l'aide d'un filtre à avance de phase de pression de vapeur FPV, est inférieur à un seuil inférieur d'alarme de pression de vapeur SALPVinf ou supérieur à un seuil supérieur d'alarme de pression de vapeur SALPVsup ou si l'écart de puissance primaire ΔP1 de ce générateur de vapeur 8, optionnellement filtré à l'aide du filtre à avance de phase de puissance primaire FP1, est inférieur au seuil inférieur d'alarme de puissance primaire SAP1inf ou supérieur au seuil supérieur d'alarme de puissance primaire SAP1sup ; et/ou
- l'émission d'un signal de dérive de mesure de débit de vapeur DMDV si l'écart de débit de vapeur ΔDV de ce générateur de vapeur 8 est inférieur au seuil inférieur d'écart de débit de vapeur SECDVinf ou supérieur au seuil supérieur d'écart de débit de vapeur SCDVsup, et, en outre, si l'écart de pression de vapeur ΔPV de ce générateur de vapeur 8, optionnellement filtré à l'aide d'un filtre à avance de phase, n'est pas inférieur au seuil inférieur d'alarme de pression de vapeur SALPVinf ni supérieur à un seuil supérieur d'alarme de pression de vapeur SALPVsup et si l'écart de puissance primaire ΔP1 de ce générateur de vapeur 8, optionnellement filtré à l'aide d'un filtré à avance de phase de puissance primaire FP1, n'est pas inférieur au seuil inférieur d'alarme de puissance primaire SALP1inf ni supérieur au seuil supérieur d'alarme de puissance primaire SALP1sup.

De préférence, les seuils d'écart et les seuils d'alarme pris en compte pour caractériser un déséquilibre sur la pression de vapeur PV sont différents.

De préférence, la valeur absolue de chaque seuil d'écart (seuil inférieur d'écart de pression de vapeur SECPVinf et seuil supérieur d'écart de pression de vapeur SECPVsup) est supérieure ou égale à celle du seuil d'alarme correspondant (respectivement seuil inférieur d'alarme de pression de vapeur SALPVinf et seuil supérieur d'alarme de pression de vapeur SALPVsup).

De préférence, les seuils d'écart et les seuils d'alarme pris en compte pour caractériser un déséquilibre sur le débit de vapeur DV sont différents.

De préférence, la valeur absolue de chaque seuil d'écart (seuil inférieur d'écart de débit de vapeur SECDVinf et seuil supérieur d'écart de débit de vapeur SECDVsup) est supérieure ou égale à celle du seuil d'alarme correspondant (respectivement seuil inférieur d'alarme de débit de vapeur SALDVinf et seuil supérieur d'alarme de débit de vapeur SALDVsup).

Dans un exemple de réalisation, le procédé de surveillance comprend, pour chaque générateur de vapeur 8 :
- l'émission d'un signal alarme de puissance primaire ALP1 si l'écart de puissance primaire ΔP1 de ce générateur de vapeur 8, optionnellement filtré à l'aide du filtre à avance de phase de puissance primaire FP1, est inférieur au seuil inférieur d'alarme de puissance primaire SALP1inf ou supérieur au seuil supérieur d'alarme de puissance primaire SALP1sup ;
- l'émission d'un signal d'alarme de pression de vapeur ALPV si l'écart de pression de vapeur ΔPV de ce générateur de vapeur 8, optionnellement filtré à l'aide du filtre à avance de phase de pression de vapeur FPV, est inférieur au seuil inférieur d'alarme de pression de vapeur SALPVinf ou supérieur au seuil supérieur d'alarme de pression de vapeur SALPVsup ;
- l'émission d'un signal d'écart de pression de vapeur ECPV si l'écart de pression de vapeur ΔPV de ce générateur de vapeur 8 est inférieur au seuil inférieur d'écart de pression de vapeur SECPVinf ou supérieur au seuil supérieur d'écart de pression de vapeur SECPVsup,
- l'émission d'un signal d'alarme de débit de vapeur ALDV si l'écart de débit de vapeur ΔDV de ce générateur de vapeur 8, optionnellement filtré à l'aide du filtre à avance de phase de débit vapeur FDV, est inférieur au seuil inférieur d'alarme de débit de vapeur SALDVinf ou supérieur au seuil supérieur d'alarme de débit de vapeur SALDVsup ; et/ou
- l'émission d'un signal d'écart de débit de vapeur ECDV si l'écart de débit de vapeur ΔDV de ce générateur de vapeur 8 est inférieur au seuil inférieur d'écart de débit de vapeur SECDVinf ou supérieur au seuil supérieur d'écart de débit de vapeur SECDVsup.

Dans un exemple de réalisation, pour chaque générateur de vapeur 8, la caractérisation d'un déséquilibre sur la pression de vapeur PV ou d'un déséquilibre sur le débit de vapeur DV est par exemple réalisée en fonction du ou des signaux d'alarme (ALP1 , ALPV, ALDV) et en fonction du ou des signaux d'écart (ECPV, ECDV), selon les conditions indiquées auparavant, et par exemple à l'aide de portes logiques (porte(s) « ou », porte(s) « et », porte(s) inverseuse(s)...) ou de tables de vérités ou d'instructions de code logiciel codant les conditions indiquées auparavant.

La Figure 3 illustre une unité électronique de surveillance 60 configurée pour la caractérisation d'un déséquilibre sur la pression de vapeur ou d'un déséquilibre sur le débit de vapeur, en fonction du ou des signaux d'alarme et en fonction du ou des signaux d'écart, à l'aide de porte logiques.

Tel qu'illustrée sur la Figure 3, l'unité électronique de surveillance 60 comprend, pour chaque générateur de vapeur 8, un comparateur différentiel de puissance primaire 62 pour calculer l'écart de puissance primaire ΔP1, un comparateur différentiel de pression de vapeur 64 pour calculer l'écart de pression de vapeur ΔPV, et un comparateur différentiel de débit de vapeur 66 pour calculer l'écart de débit de vapeur ΔDV.

L'unité électronique de surveillance 60 comprend en outre un comparateur à seuil d'alarme de puissance primaire 68 pour l'émission du signal alarme de puissance primaire ALP1, un comparateur à seuil d'alarme de pression de vapeur 70 pour l'émission du signal d'alarme de pression de vapeur ALPV, un comparateur à seuil d'écart de pression de vapeur 72 pour l'émission du signal d'écart de pression de vapeur ECPV, un comparateur à seuil d'alarme de débit de vapeur 74 pour l'émission du signal d'alarme de débit de vapeur ALDV, et/ou un comparateur à seuil d'écart de débit de vapeur 76 pour l'émission du signal d'écart de débit de vapeur ECDV.

Chaque comparateur à seuil émet le signal d'alarme ou le signal d'écart correspondant en fonction des conditions d'émission indiquées plus haut, sous la forme d'un signal logique.

L'unité électronique de surveillance 60 comprend des portes logiques pour l'émission des signaux de problème physique PPPV, PPDV et de dérive de mesure DMPV, DMDV en fonction des signaux d'alarme et des signaux d'écart émis par les comparateurs à seuil, selon les critères indiqués plus haut.

Dans un exemple de mise en œuvre, le procédé de surveillance comprend, pour chaque générateur de vapeur 8, le calcul d'un écart de température d'eau alimentaire ΔTE comme la différence entre la température d'eau alimentaire mesurée TEmes pour ce générateur ce vapeur 8 et la température d'eau alimentaire moyenne TEavg pour l'ensemble des générateurs de vapeur 8.

Pour chaque générateur de vapeur 8, la caractérisation d'un déséquilibre sur la température d'eau alimentaire de ce générateur de vapeur 8 comprend par exemple :
- l'émission d'un signal de problème physique de température d'eau alimentaire PPTE si l'écart de température d'eau alimentaire ΔTE de ce générateur de vapeur 8 est inférieur à un seuil inférieur d'écart de température d'eau alimentaire SECTEinf ou supérieur à un seuil supérieur d'écart de température d'eau alimentaire SECTEsup, et si l'écart de puissance primaire ΔP1 de ce générateur de vapeur 8 est inférieur au seuil inférieur d'alarme de puissance primaire SALP1 inf ou supérieur au seuil supérieur d'alarme de puissance primaire SALP1sup ; et/ou
- l'émission d'un signal de dérive de mesure de température d'eau alimentaire DMTE si l'écart de température d'eau alimentaire ΔTE de ce générateur de vapeur 8 est inférieur à un seuil inférieur d'écart de température d'eau alimentaire SECTEinf ou supérieur à un seuil supérieur d'écart de température d'eau alimentaire SECTEsup, et si l'écart de puissance primaire ΔP1 de ce générateur de vapeur 8 n'est pas inférieur au seuil inférieur d'alarme de puissance primaire SALP1inf ni supérieur au seuil supérieur d'alarme de puissance primaire SALP1sup.

Dans un exemple de réalisation, le procédé de surveillance comprend, pour chaque générateur de vapeur 8, l'émission d'un signal d'écart de température d'eau alimentaire ECTE si l'écart de température d'eau alimentaire ΔTE est inférieur au seuil inférieur d'écart de température d'eau alimentaire SECTEinf ou supérieur au seuil supérieur d'écart de température d'eau alimentaire SECTEsup.

Le procédé de surveillance comprend par exemple, pour chaque générateur de vapeur 8, la caractérisation d'un déséquilibre sur la température d'eau alimentaire en fonction du signal d'écart de température d'eau alimentaire ECTE et du signal d'alarme de puissance primaire ALP1, selon les conditions indiquées auparavant, et par exemple à l'aide de portes logiques (porte(s) « ou », porte(s) « et », porte(s) inverseuse(s)...) ou de tables de vérités ou d'instructions de code logiciel codant les conditions indiquées auparavant.

En option, le procédé de surveillance comprend, pour chaque générateur de vapeur 8, l'émission d'un signal d'alarme de température d'eau alimentaire ALTE si l'écart de température d'eau alimentaire ΔTE, optionnellement filtré à l'aide d'un filtre à avance de phase de température d'eau alimentaire FTE, est inférieur au seuil inférieur d'alarme de température d'eau alimentaire SALTEinf ou supérieur au seuil supérieur d'alarme de température d'eau alimentaire SALTEsup.

De préférence, chaque seuil d'écart (seuil inférieur d'écart de température d'eau alimentaire SECTEinf et seuil supérieur d'écart de de température d'eau alimentaire SECTEsup) et le seuil d'alarme correspondant (seuil inférieur d'alarme de température d'eau alimentaire SALTEinf et seuil supérieur d'alarme de température d'eau alimentaire SALTEsup) sont différents, le seuil d'écart étant préférentiellement supérieur ou égal en valeur absolue au seuil d'alarme correspondant.

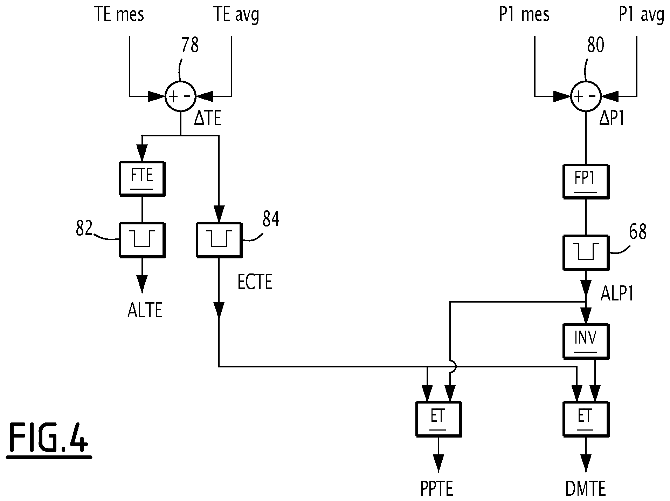

La Figure 4 illustre une unité électronique de surveillance 60 configurée pour la caractérisation d'un déséquilibre sur la température d'eau alimentaire d'un générateur de vapeur 8 en fonction du ou des signaux d'alarme et en fonction du ou des signaux d'écart, à l'aide de porte logiques.

Tel qu'illustrée sur la Figure 4, l'unité électronique de surveillance 60 comprend, pour chaque générateur de vapeur 8, un comparateur différentiel de température d'eau alimentaire 78 pour calculer l'écart la température d'eau de ce générateur de vapeur 8.

L'unité électronique de surveillance 60 comprend en outre un comparateur à seuil d'alarme de puissance primaire 68 pour l'émission du signal alarme de puissance primaire ALP1, un comparateur à seuil d'alarme de température d'eau alimentaire 82 pour l'émission du signal d'alarme de température d'eau alimentaire ALTE, et/ou un comparateur à seuil d'écart de température d'eau alimentaire 84 pour l'émission du signal d'écart de température d'eau alimentaire ECTE.

Chaque comparateur à seuil émet le signal d'alarme ou le signal d'écart correspondant en fonction des conditions d'émission indiquées plus haut.

L'unité électronique de surveillance 60 comprend des portes logiques pour l'émission des signaux de problème physique et de dérive de mesure en fonction des signaux d'alarme et des signaux d'écart déterminés par les comparateurs à seuil, selon les conditions indiquées plus haut.

Le procédé de surveillance comprend par exemple, pour chaque générateur de vapeur 8, le calcul d'un écart de débit d'eau ΔDE comme la différence entre le débit d'eau alimentaire mesuré DEmes de ce générateur de vapeur 8 et le débit d'eau alimentaire moyen DEavg pour l'ensemble des générateurs de vapeur 8.

Le procédé de surveillance comprend en outre, pour chaque générateur de vapeur 8, le calcul d'un écart de niveau d'eau ΔNV comme la différence entre le niveau d'eau mesuré NVmes de ce générateur de vapeur 8 et un niveau d'eau de consigne NVcons.

Pour chaque générateur de vapeur, la caractérisation d'un déséquilibre sur le débit d'eau alimentaire de ce générateur de vapeur 8 est réalisée en fonction par exemple de l'écart de débit d'eau alimentaire ΔDE et de l'écart de niveau d'eau ΔNV de ce générateur de vapeur 8.

Pour chaque générateur de vapeur 8, dans un exemple de réalisation, la caractérisation d'un déséquilibre sur le débit d'eau alimentaire du générateur de vapeur 8 comprend :
- l'émission d'un signal de problème physique de débit d'eau alimentaire faible PPDEneg si l'écart de débit d'eau alimentaire ΔDE est inférieur à un seuil négatif d'écart de débit d'eau alimentaire SECDEneg et que l'écart de niveau d'eau ΔNV, éventuellement filtré à l'aide d'un filtre à avance de phase de niveau d'eau FNV, est inférieur à un seuil d'alarme de niveau d'eau négatif SALNVneg;
- l'émission d'un signal de dérive de mesure de débit d'eau alimentaire faible DMDEneg si l'écart de débit d'eau alimentaire ΔDE est inférieur au seuil négatif d'écart de débit d'eau alimentaire SECDEneg et l'écart de niveau d'eau ΔNV, éventuellement filtré à l'aide du filtre à avance de phase de niveau d'eau FNV, n'est pas inférieur au seuil négatif d'alarme de niveau d'eau SALNVneg;
- l'émission d'un signal de problème physique de débit d'eau alimentaire fort PPDEpos si l'écart de débit d'eau alimentaire est supérieur à un seuil positif d'écart de débit d'eau alimentaire SECDEpos et que la différence de niveau d'eau, éventuellement filtrée à l'aide du filtre à avance de phase de niveau d'eau FNV, est supérieure à un seuil positif d'alarme de niveau d'eau SALNVpos ; et/ou
- l'émission d'un signal de dérive de mesure de débit d'eau alimentaire fort DMDEpos si la différence de débit d'eau alimentaire ΔDE est supérieure au seuil de débit d'eau alimentaire positif SECDEpos et que l'écart de niveau d'eau ΔNV, éventuellement filtré à l'aide du filtre à avance de phase de niveau d'eau FNV, n'est pas supérieur à un seuil positif d'alarme de niveau d'eau SALNVpos.

Dans un exemple de réalisation, le procédé de surveillance comprend, pour chaque générateur de vapeur 8 :
- l'émission d'un signal d'écart de débit d'eau alimentaire négatif ECDEneg si l'écart de débit d'eau alimentaire ΔDE est inférieur au seuil négatif d'écart de débit d'eau alimentaire SECDEneg;
- l'émission d'un signal d'écart de débit d'eau alimentaire positif ECDEpos si l'écart de débit d'eau alimentaire ΔDE est supérieur à un seuil positif d'écart de débit d'eau alimentaire SECDEpos ;
- l'émission d'un signal d'alarme de débit d'eau alimentaire négatif ALDEneg si l'écart de débit d'eau alimentaire ΔDE, éventuellement filtré à l'aide du filtre à avance de phase de débit d'eau alimentaire FDE, est inférieur à un seuil négatif d'alarme de débit d'eau alimentaire SALDEneg ;
- l'émission d'un signal d'alarme de débit d'eau alimentaire positif ALDEpos si l'écart de débit d'eau alimentaire ΔDE, optionnellement filtré à l'aide du filtre à avance de phase de débit d'eau alimentaire FDE, est supérieur à un seuil positif d'alarme de débit d'eau alimentaire SALDEpos; et/ou
- l'émission d'un signal d'écart de débit comparé ECDC si l'écart de débit d'eau alimentaire ΔDE, optionnellement filtré à l'aide d'un filtre à avance de phase de débit comparé FDC, est inférieur à un seuil d'écart de débit comparé SECDCinf ou supérieur à un seuil supérieur d'écart de débit comparé SECDCsup.

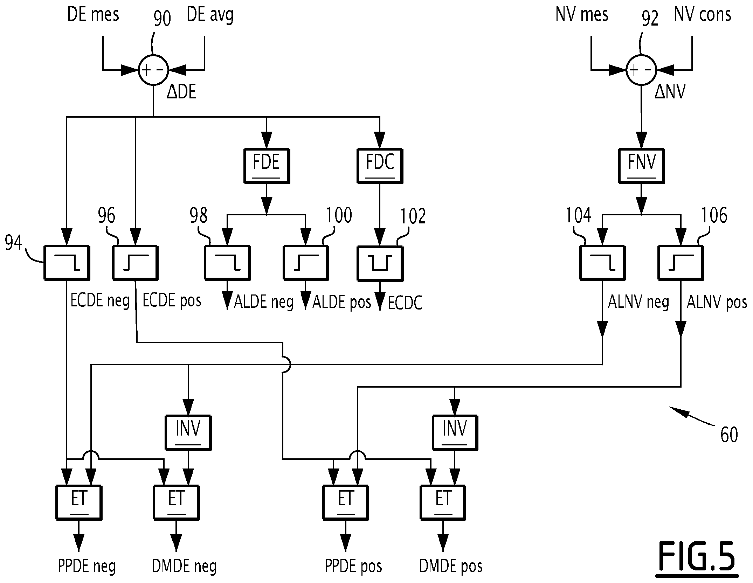

Par ailleurs, comme illustré sur la Figure 5, la procédé comprend par exemple l'émission d'un signal d'alarme d'écart de niveau d'eau négatif ALNVneg si l'écart de niveau d'eau ΔNV, éventuellement filtré à l'aide du filtre à avance de phase de niveau d'eau FNV, est inférieur au seuil négatif d'alarme de niveau d'eau SALNVneg et l'émission d'un signal d'alarme d'écart de niveau d'eau positif ALNVpos si l'écart de niveau d'eau ΔNV, éventuellement filtré à l'aide du filtre à avance de phase de niveau d'eau FNV, est supérieur au seuil positif d'alarme de niveau d'eau SALNVpos.

De préférence, chaque seuil d'écart du débit d'eau alimentaire (seuil négatif d'écart de débit d'eau alimentaire et seuil positif d'écart de débit d'eau alimentaire) et le seuil d'alarme correspondant (respectivement seuil négatif d'alarme de débit d'eau alimentaire et seuil positif d'alarme de débit d'eau alimentaire) sont différents. En particulier, en valeur absolue, chaque seuil d'écart est de préférence supérieur au seuil d'alarme correspondant.

Le procédé de surveillance comprend par exemple, pour chaque générateur de vapeur 8, la caractérisation d'un déséquilibre sur le débit d'eau alimentaire DE en fonction des signaux d'écart relatifs au débit d'eau alimentaire DE (signal d'écart de débit d'eau alimentaire négatif ECDEneg et signal d'écart de débit d'eau alimentaire positif ECDEpos) et en fonction des signaux d'alarme relatifs au niveau d'eau (signal d'alarme de niveau d'eau négatif ALNVneg et signal d'alarme de niveau d'eau positif ALNVpos), selon les conditions indiquées auparavant, et par exemple à l'aide de portes logiques (porte(s) « ou », porte(s) « et », porte(s) inverseuse(s)...) ou de tables de vérités ou d'instructions de code logiciel codant les conditions indiquées auparavant.

Dans un exemple de mise en œuvre, le procédé de surveillance comprend, pour chaque générateur de vapeur 8, le calcul d'un écart de débit de purge ΔDP comme une différence entre le débit de purge mesuré DPmes de ce générateur de vapeur 8 et le débit de purge moyen DPavg pour l'ensemble des générateurs de vapeur 8.

Pour chaque générateur de vapeur 8, le procédé de surveillance comprend par exemple :
- l'émission d'un signal de problème physique de débit de purge PPDP si l'écart de débit de purge ΔDP passe au-dessous d'un seuil inférieur d'écart de débit de purge SECDPinf ou au-dessus d'un seuil supérieur d'écart de débit de purge SECDPsup, et si l'écart de débit d'eau alimentaire ΔDE de ce générateur de vapeur 8, optionnellement filtré à l'aide du filtre à avance de phase de débit comparé FDC, est inférieur au seuil inférieur d'écart de débit comparé SECDCinf ou supérieur au seuil supérieur d'écart de débit comparé SECDCsup ; et/ou
- l'émission d'un signal de dérive de mesure de débit de purge DMDP si l'écart de débit de purge ΔDP de ce générateur de vapeur passe au-dessous d'un seuil inférieur d'écart de débit de purge SECDPinf ou au-dessus d'un seuil supérieur d'écart de débit de purge SECDPsup, et si l'écart de débit d'eau alimentaire ΔDE de ce générateur de vapeur 8, optionnellement filtré à l'aide du filtre à avance de phase de débit comparé FDC, n'est pas inférieur au seuil inférieur d'écart de débit comparé SECDCinf ni supérieur au seuil supérieur d'écart de débit comparé SECDCsup.

En particulier, lorsque le procédé de surveillance comprend l'émission éventuelle d'un signal d'écart de débit d'eau alimentaire comparé ECDC émis ou non (i.e. absent) selon les conditions indiquées plus haut, le procédé de surveillance comprend par exemple, pour chaque générateur de vapeur 8:
- l'émission d'un signal de problème physique de débit de purge PPDP si l'écart de débit de purge ΔDP passe au-dessous d'un seuil inférieur d'écart de débit de purge SECDPinf ou au-dessus d'un seuil supérieur d'écart de débit de purge SECDPsup, et si signal d'écart de débit d'eau alimentaire comparé ECDC est présent ; et/ou
- l'émission d'un signal de dérive de mesure de débit de purge DMDP si l'écart de débit de purge ΔDP de ce générateur de vapeur passe au-dessous d'un seuil inférieur d'écart de débit de purge SECDPinf ou au-dessus d'un seuil supérieur d'écart de débit de purge SECDPsup, et si signal d'écart de débit d'eau alimentaire comparé ECDC est absent.

Dans un exemple de réalisation, le procédé de surveillance comprend l'émission d'un signal d'écart de débit de purge ECDP si l'écart de débit de purge passe au-dessous du seuil inférieur d'écart de débit de purge SECDPinf ou au-dessus du seuil supérieur d'écart de débit de purge SECDPsup.

Par ailleurs, le procédé de surveillance comprend par exemple, pour chaque générateur de vapeur 8, la caractérisation d'un déséquilibre sur le débit de purge en fonction du signal d'écart de débit de purge ECDP et du signal d'écart de débit comparé ECDC, selon les conditions indiquées auparavant, et par exemple à l'aide de portes logiques (porte(s) « ou », porte(s) « et », porte inverseuse...) ou de tables de vérités ou d'instructions de code logiciel codant les conditions indiquées auparavant.

En option, le procédé de surveillance comprend, pour chaque générateur de vapeur 8, l'émission d'un signal d'alarme de débit de purge ALDP si l'écart de débit de purge ΔDP, optionnellement filtré à l'aide d'un filtre à avance de phase de débit de purge FDP, est inférieur au seuil inférieur d'alarme de débit de purge SALDPinf ou supérieur au seuil supérieur d'alarme de débit de purge SALDPsup.

De préférence, chaque seuil d'écart (seuil inférieur d'écart de débit de purge SECDPinf et seuil supérieur d'écart de débit de purge SECDPsup) est supérieur ou égal en valeur absolue au seuil d'alarme correspondant (seuil inférieur d'alarme de débit de purge SALDPinf et seuil supérieur d'alarme de débit de purge SALDPsup).

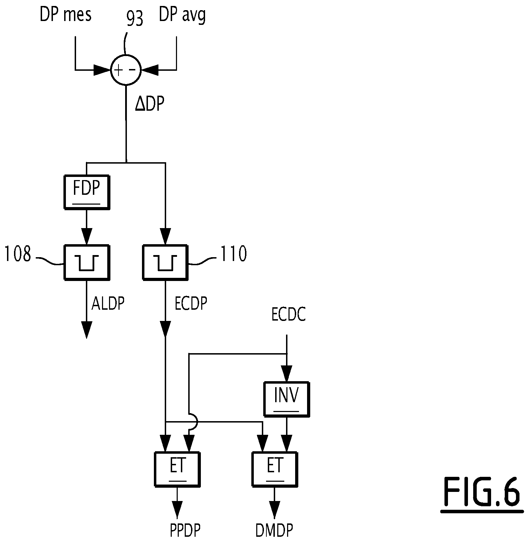

Les Figures 5 et 6 illustrent une unité électronique de surveillance 60 configurée pour la mise en œuvre du procédé de surveillance, et en particulier pour la caractérisation d'un déséquilibre sur le débit d'eau alimentaire et/ou le débit de purge d'un générateur de vapeur 8 en fonction du ou des signaux d'alarme et en fonction du ou des signaux d'écart, à l'aide de porte logiques.

Tel qu'illustrée sur les Figures 5 et 6, l'unité électronique de surveillance 60 comprend, pour chaque générateur de vapeur 8, un comparateur différentiel de débit d'eau alimentaire 90 (Figure 5) pour calculer l'écart de débit d'eau alimentaire de ce générateur de vapeur 8, un comparateur différentiel de débit de niveau d'eau 92 (Figure 5) pour calculer la différence entre la mesure de niveau NVmes d'eau et la consigne de niveau d'eau NVcons de ce générateur de vapeur 8, et un comparateur différentiel de débit de purge 93 (Figure 6) pour calculer l'écart de débit de purge de ce générateur de vapeur 8.

L'unité électronique de surveillance 60 comprend en outre (Figure 5) un comparateur à seuil négatif d'écart de débit d'eau alimentaire 94 pour l'émission du signal d'écart de débit d'eau alimentaire négatif ECDEneg, un comparateur à seuil positif d'écart de débit d'eau alimentaire 96 pour l'émission du signal d'écart de débit d'eau alimentaire positif ECDEpos, un comparateur à seuil négatif d'alarme de débit d'eau alimentaire 98 pour l'émission du signal d'alarme indiquant un écart de débit d'eau alimentaire négatif ALDEneg, un comparateur à seuil positif d'alarme de débit d'eau alimentaire 100 pour l'émission du signal d'alarme indiquant un écart de débit d'eau alimentaire positif ALDEpos, un comparateur à seuil de débit comparé 102 pour l'émission du signal d'écart de débit comparé ECDC, un comparateur à seuil négatif de niveau d'eau 104 pour l'émission du signal d'alarme indiquant une différence de niveau d'eau mesure-consigne négative ALNVneg, et/ou un comparateur à seuil positif de niveau d'eau 106 pour l'émission du signal d'alarme indiquant une différence de niveau d'eau mesure - consigne positive ALNVpos.

L'unité électronique de surveillance 60 comprend en outre (Figure 6), un comparateur à seuil d'alarme de débit de purge 108 pour l'émission du signal d'alarme de débit de purge ALDP et un comparateur à seuil d'écart de débit de purge 110 pour l'émission du signal d'écart de débit de purge ECDP.

Chaque comparateur à seuil émet le signal d'alarme ou le signal d'écart correspondant en fonction des conditions d'émission indiquées plus haut.

L'unité électronique de surveillance 60 comprend des portes logiques pour l'émission des signaux de problème physique et de dérive de mesure en fonction des signaux d'alarme et des signaux d'écart déterminés par les comparateurs à seuil, selon les critères indiqués plus haut.

La comparaison de la valeur mesurée d'un paramètre d'un générateur de vapeur 8 à la valeur moyenne de ce paramètre sur l'ensemble des générateurs de vapeur 8 permet d'identifier un déséquilibre de ce paramètre sur ce générateur de vapeur 8 par rapport aux autres générateurs de vapeur 8.

Un tel déséquilibre peut être dû à un problème physique sur ce générateur de vapeur 8, i.e. un problème effectivement présent sur ce générateur de vapeur 8 affecté par le déséquilibre, ou à une dérive de mesure dudit paramètre sur ce générateur de vapeur 8.

Chaque autre paramètre pris en compte pour la caractérisation d'un déséquilibre détecté sur un paramètre est de préférence un autre paramètre lié audit paramètre sur lequel un déséquilibre est détecté, et qui devrait aussi être affecté par le déséquilibre.

Ainsi, comme indiqué plus haut :
- la caractérisation d'un déséquilibre sur la pression de vapeur d'un générateur de vapeur 8 est réalisée par exemple en fonction du débit de vapeur et de la puissance primaire, en particulier en fonction d'un écart entre le débit de vapeur mesuré DVmes de ce générateur de vapeur 8 et le débit de vapeur d'eau moyen DVavg des générateurs de vapeur 8 et d'un écart entre la puissance primaire mesurée P1mes de ce générateur de vapeur 8 et la puissance primaire moyenne P1avg pour l'ensemble des générateurs de vapeur 8 ;
- la caractérisation d'un déséquilibre sur le débit de vapeur d'un générateur de vapeur 8 est réalisée en fonction par exemple de la pression de vapeur et de la puissance primaire, en particulier en fonction d'un écart entre la pression de vapeur mesurée PVmes de ce générateur de vapeur 8 et la pression de vapeur moyenne PVavg de l'ensemble des générateurs de vapeur 8 et d'un écart entre la puissance primaire mesurée P1mes de ce générateur de vapeur 8 et la puissance primaire moyenne P1avg des générateurs de vapeur 8 ;
- la caractérisation d'un déséquilibre sur la température d'eau alimentaire d'un générateur ce vapeur 8 est réalisée par exemple en fonction de la puissance primaire, en particulier en fonction d'un écart entre la puissance primaire mesurée P1mes de ce générateur de vapeur 8 et la puissance primaire moyenne P1avg de l'ensemble des générateurs de vapeur 8;
- la caractérisation d'un déséquilibre sur le débit d'eau alimentaire d'un générateur de vapeur 8 est réalisée par exemple en fonction du niveau d'eau de ce générateur de vapeur 8, en particulier en fonction d'un écart entre un niveau d'eau mesuré NVmes de ce générateur de vapeur 8 et un niveau d'eau de consigne NVcons; et/ou
- la caractérisation d'un déséquilibre sur le débit de purge d'un générateur de vapeur 8 est réalisée par exemple en fonction du débit d'eau alimentaire de ce générateur de vapeur 8, en particulier en fonction d'un écart entre le débit d'eau alimentaire mesuré DEmes de ce générateur de vapeur 8 et le débit d'eau alimentaire moyen DEavg de l'ensemble des générateurs de vapeur 8.

La caractérisation du déséquilibre sur un paramètre d'un générateur de vapeur 8 en fonction d'un ou plusieurs autre(s) paramètre(s) permet au système de surveillance 40 de générer automatiquement un signal indiquant que le déséquilibre détecté est dû à un problème physique sur le générateur de vapeur ou à une dérive de la mesure de ce paramètre sur ce générateur de vapeur.

Chaque signal d'alarme, chaque signal d'écart, chaque signal de problème physique et/ou chaque signal de dérive de mesure permet de détecter un déséquilibre avéré ou potentiel entre les générateurs de vapeur 8.

L'utilisation de filtres à avance de phase dans le traitement des mesures fournies par certains des capteurs permet en particulier d'anticiper des problèmes potentiels, ce qui permet à un opérateur humain de se préparer davantage à l'apparition d'un écart plus significatif sur un paramètre particulier.

Chaque signal d'alarme, chaque signal d'écart, chaque signal de problème physique et/ou chaque signal de dérive de mesure relatif à un paramètre est déterminé en fonction d'un ou plusieurs autre(s) paramètre(s), ce qui permet de générer lesdits signaux de manière opportune.

De préférence, au moins un, et en particulier chacun, des paramètres suivant fait l'objet d'une caractérisation pouvant conduire à l'émission d'un signal d'alarme, d'un signal d'écart, d'un signal de problème physique et/ou d'un signal de dérive de mesure : la pression de vapeur PV, le débit de vapeur DV, la température d'eau alimentaire TE, le débit d'eau alimentaire DE et le débit de purge DP.

Chacun de ces paramètres caractérisé en prenant en compte un autre paramètre, permet de détecter, éventuellement de manière anticipée, l'apparition d'un déséquilibre dans le fonctionnement des générateurs de vapeur.

Dans un exemple de réalisation, chaque signal d'alarme, chaque signal d'écart, chaque signal de problème physique et/ou chaque signal de dérive de mesure est émis de manière à être perceptible par un opérateur humain, par exemple sous la forme d'un signal visuel, d'un signal sonore et/ou d'un signal tactile. L'opérateur peut ainsi prendre des mesures nécessaires.

Chaque signal d'alarme, chaque signal d'écart, chaque signal de problème physique et/ou chaque signal de dérive de mesure émis de manière à être perceptible par un opérateur humain est par exemple émis par l'intermédiaire d'une interface homme-machine. L'interface homme-machine comprend par exemple un écran d'affichage, un tableau de contrôle et/ou un dispositif d'émission de sons.

La caractérisation du déséquilibre, après avoir été confirmée, permet à un opérateur ou au système de surveillance, lorsque celui-ci est configuré pour le pilotage de la centrale nucléaire 2, de prendre des mesures appropriées suite à la détection et la confirmation d'un déséquilibre, selon qu'il s'agit d'un problème physique ou d'une dérive de mesure.

En cas de caractérisation d'un problème physique, la centrale nucléaire 2 peut être pilotée pour compenser le problème physique ou passer la centrale nucléaire 2 dans un mode de fonctionnement permettant de corriger le problème physique.

En case de caractérisation d'une dérive de mesure, il est possible de tenir compte de la dérive pour corriger des signaux de mesure fournis par le(s) capteur(s) en cause ou de réaliser la maintenance (réparation ou changement) du ou des équipement(s) défectueux dans un état en puissance ou à l'arrêt de la tranche.

Le procédé de surveillance selon l'invention permet de fournir à l'opérateur humain une aide au pilotage de la centrale nucléaire.

Chaque signal d'alarme, chaque signal d'écart, chaque signal de problème physique et/ou chaque signal de dérive de mesure émis de manière à être perceptible par un opérateur humain permet d'alerter l'opérateur humain en cas de fonctionnement déséquilibré d'un des générateurs de vapeur 8 de la centrale nucléaire 2.

Chaque signal d'alarme, chaque signal d'écart, chaque signal de problème physique et/ou chaque signal de dérive de mesure émis à l'attention de l'opérateur humain aide ce dernier à établir un diagnostic, par exemple en permettant de localiser l'origine du problème signalé (i.e. de déterminer quelle partie de la centrale nucléaire 2 peut être à l'origine du problème signalé) et la cause du problème signalé (i.e. quelle est la raison du problème signalé : problème physique ou dérive de mesure).

Chaque signal d'alarme, chaque signal d'écart, chaque signal de problème physique et/ou chaque signal de dérive de mesure émis de manière à être perceptible par un opérateur humain permet d'aider à la recherche d'une fuite éventuelle dans le circuit primaire ou le circuit secondaire et/ou d'alerter l'opérateur humain en cas de fonctionnement déséquilibré d'un des générateurs de vapeur 8 de la centrale nucléaire 2.

## Revendications

1. Procédé de surveillance d'une centrale nucléaire (2) mis en œuvre par un système de surveillance (40), la centrale nucléaire (2) possédant un circuit primaire (4), un circuit secondaire (6), un réacteur nucléaire (10) agencé dans le circuit primaire (4) pour chauffer de l'eau circulant dans le circuit primaire (4), et N générateurs de vapeur (8) agencés pour transférer la chaleur du circuit primaire (4) au circuit secondaire (6) en générant de la vapeur dans le circuit secondaire (6), N étant un nombre entier égal ou supérieur à 2, le système de surveillance (40) comprenant des capteurs pour la mesure, pour chaque générateur de vapeur (8), de paramètres d'un jeu de paramètres représentatifs du fonctionnement du générateur de vapeur (8), **caractérisé en ce que** le procédé de surveillance comprend, pour au moins un des paramètres du jeu de paramètres représentatifs, et pour chaque générateur de vapeur (8) :
- la détermination, en fonction des mesures fournies par les capteurs, d'un écart entre une valeur mesurée du paramètre pour ce générateur de vapeur (8) et la valeur moyenne de ce paramètre pour l'ensemble des générateurs de vapeur (8) pour détecter un déséquilibre de ce paramètre sur le générateur de vapeur (8) ; et
- la caractérisation du déséquilibre affectant ce paramètre de ce générateur de vapeur (8) en fonction d'un ou plusieurs autre(s) paramètre(s) du jeu de paramètres représentatifs, de manière à générer un signal de problème physique indicatif de la présence d'un problème physique sur le générateur de vapeur (8) affecté par le déséquilibre ou un signal de dérive de mesure indicatif d'une dérive de la mesure du paramètre considéré sur le générateur de vapeur (8) affecté par le déséquilibre.

2. Procédé de surveillance selon la revendication 1, dans lequel, pour au moins un des paramètres du jeu de paramètres représentatifs, la caractérisation d'un déséquilibre du paramètre est réalisée en fonction, pour au moins un ou chacun dudit ou desdits autre(s) paramètre(s), d'un écart entre une valeur mesurée de cet autre paramètre pour le générateur de vapeur (8) considéré et une valeur de référence de cet autre paramètre pour l'ensemble des générateurs de vapeur (8), la valeur de référence étant choisie parmi une valeur moyenne de cet autre paramètre et une valeur de consigne de cet autre paramètre.

3. Procédé de surveillance selon la revendication 1 ou 2, comprenant la comparaison d'au moins un ou de chaque écart entre une valeur mesurée et une valeur de référence d'un paramètre à un ou plusieurs seuil(s) de comparaison, pour détecter un déséquilibre sur ce paramètre ou pour détecter un déséquilibre sur un autre paramètre, la valeur de référence étant choisie parmi une valeur moyenne et une valeur de consigne de ce paramètre.

4. Procédé de surveillance selon l'une quelconque des revendications précédentes, dans lequel, pour au moins un des paramètres du jeu de paramètres représentatifs, la caractérisation du déséquilibre du paramètre sur le générateur de vapeur (8) considéré comprend :
- l'émission d'un signal de problème physique si l'écart entre la valeur mesurée et la valeur moyenne calculée pour ce paramètre est inférieur à un seuil inférieur associé à ce paramètre ou supérieur à un seuil supérieur associé à ce paramètre, et si l'écart entre la valeur mesurée et une valeur de référence d'un autre paramètre du jeu de paramètres représentatifs, choisie de préférence parmi la valeur moyenne calculée pour cet autre paramètre et une valeur de consigne de cet autre paramètre, optionnellement filtré à l'aide d'un filtre à avance de phase, est inférieur à un seuil inférieur associé à cet autre paramètre ou supérieur à un seuil supérieur associé à cet autre paramètre ; et/ou
- l'émission d'un signal de dérive de mesure si l'écart calculé pour ce paramètre est inférieur à un seuil inférieur associé à ce paramètre ou supérieur à un seuil supérieur associé à ce paramètre, et si l'écart entre la valeur mesurée et une valeur de référence d'un autre paramètre du jeu de paramètres représentatifs, choisie de préférence parmi la valeur moyenne calculée pour ledit autre paramètre et un valeur de consigne dudit autre paramètre, optionnellement filtré à l'aide d'un filtre à avance de phase, n'est pas inférieur au seuil inférieur associé à cet autre paramètre ni supérieur au seuil supérieur associé à cet autre paramètre.

5. Procédé de surveillance selon l'une quelconque des revendications précédentes, dans lequel, pour chaque générateur de vapeur (8), et pour au moins un des paramètres du jeu de paramètres représentatifs, la caractérisation d'un déséquilibre de ce paramètre sur ce générateur de vapeur (8) comprend :
- l'émission d'un premier signal de problème physique si l'écart entre la valeur mesurée et la valeur moyenne calculée pour ce paramètre est inférieur à un seuil inférieur négatif et si l'écart entre la valeur mesurée et une valeur de référence d'un autre paramètre du jeu de paramètres représentatifs, choisie de préférence parmi la valeur moyenne calculée pour cet autre paramètre et une valeur de consigne de cet autre paramètre, éventuellement filtré à l'aide d'un filtre à avance de phase, est inférieur à un seuil inférieur négatif ;
- l'émission d'un premier signal de dérive de mesure si l'écart entre la valeur mesurée et la valeur moyenne calculée pour ce paramètre est inférieur au seuil inférieur négatif et si l'écart entre la valeur mesurée et la valeur de référence pour l'autre paramètre, éventuellement filtrée à l'aide d'un filtre à avance de phase, n'est pas inférieur au seuil inférieur négatif ;
- l'émission d'un deuxième signal de problème physique si l'écart entre la valeur mesurée et la valeur moyenne calculée pour ce paramètre est supérieur à un seuil supérieur positif et si l'écart entre la valeur mesurée et la valeur de référence pour l'autre paramètre, éventuellement filtré à l'aide d'un filtre à avance de phase, est supérieur à un seuil supérieur positif ; et/ou
- l'émission d'un deuxième signal de dérive de mesure si l'écart entre la valeur mesurée et la valeur moyenne calculée pour ce paramètre est supérieur à un seuil supérieur positif et si l'écart entre la valeur mesurée et la valeur de référence pour l'autre paramètre, éventuellement filtré à l'aide d'un filtre à avance de phase, n'est pas supérieur au seuil supérieur positif.

6. Procédé de surveillance selon l'une quelconque des revendications précédentes, pour chaque générateur de vapeur (8) et pour au moins un des paramètres du jeu de paramètres représentatifs, l'émission d'un signal d'alarme si l'écart entre la valeur mesurée et une valeur de référence est inférieur un seuil d'alarme inférieur et/ou l'émission d'un signal d'alarme si l'écart entre la valeur mesurée et la valeur de référence est supérieur un seuil d'alarme supérieur, la valeur de référence étant choisie parmi une valeur moyenne de ce paramètre et une valeur de consigne de ce paramètre.

7. Procédé de surveillance selon la revendication 6, dans lequel l'écart entre la valeur mesurée et la valeur de référence est filtré à l'aide d'un filtre à avance de phase avant d'être comparé au seuil d'alarme inférieur et/ou avant d'être comparé au seuil d'alarme supérieur.

8. Procédé de surveillance selon la revendication 7, dans lequel la caractérisation d'un déséquilibre sur au moins un ou chacun des paramètres du jeu de paramètres représentatifs comprend la prise en compte d'un signal d'alarme émis pour un autre paramètre du jeu de paramètres représentatifs.

9. Procédé de surveillance selon l'une quelconque des revendications précédentes, pour chaque générateur de vapeur (8) et pour au moins un des paramètres du jeu de paramètres représentatifs, l'émission d'un signal d'écart si l'écart entre la valeur mesurée et une valeur de référence de ce paramètre est inférieur un seuil d'écart inférieur et/ou l'émission d'un signal d'écart si l'écart entre la valeur mesurée et la valeur de référence de ce paramètre est supérieur un seuil d'écart supérieur, la valeur de référence étant choisie parmi une valeur moyenne de ce paramètre et une valeur de consigne de ce paramètre.

10. Procédé de surveillance selon les revendication 6 et 9, dans lequel la caractérisation d'un déséquilibre d'au moins un des paramètres d'un générateur de vapeur est réalisée en fonction d'un signal d'écart émis pour ce paramètre et d'un signal d'alarme ou d'écart émis pour au moins un autre paramètre pris en compte pour la caractérisation.

11. Procédé de surveillance selon l'une quelconque des revendications précédentes, dans lequel, pour chaque générateur de vapeur, le jeu de paramètres représentatifs comprend un ou plusieurs des paramètres suivants : le débit de vapeur (DV), la pression de vapeur (PV), le débit d'eau alimentaire (DE), le température d'eau alimentaire (TE), le débit de purge (DP), le niveau d'eau à l'état liquide (NV) et la puissance primaire (P1).

12. Procédé de surveillance selon la revendication 11, dans lequel la caractérisation d'un déséquilibre sur la pression de vapeur d'un générateur de vapeur (8) est réalisée en fonction du débit de vapeur et de la puissance primaire, en particulier en fonction d'un écart entre le débit de vapeur mesuré (DVmes) de ce générateur de vapeur (8) et le débit de vapeur moyen (DVavg) des générateurs de vapeur (8) et d'un écart entre la puissance primaire mesurée (P1mes) de ce générateur de vapeur (8) et la puissance primaire moyenne (P1avg) pour l'ensemble des générateurs de vapeur (8).

13. Procédé de surveillance selon la revendication 11 ou la revendication 12, dans lequel la caractérisation d'un déséquilibre sur le débit de vapeur d'un générateur de vapeur (8) est réalisée en fonction de la pression de vapeur et de la puissance primaire, en particulier en fonction d'un écart entre la pression de vapeur mesurée (PVmes) de ce générateur de vapeur (8) et la pression de vapeur moyenne (PVavg) de l'ensemble des générateurs de vapeur (8) et d'un écart entre la puissance primaire mesurée (P1mes) de ce générateur de vapeur (8) et la puissance primaire moyenne (P1avg) des générateurs de vapeur (8).

14. Procédé de surveillance selon l'une quelconque des revendications 11 à 13, dans lequel la caractérisation d'un déséquilibre sur la température d'eau alimentaire (TE) d'un générateur de vapeur (8) est réalisée en fonction de la puissance primaire, en particulier en fonction d'un écart entre la puissance primaire mesurée (P1mes) de ce générateur de vapeur (8) et la puissance primaire moyenne (P1avg) de l'ensemble des générateurs de vapeur (8).

15. Procédé de surveillance selon l'une quelconque des revendications 11 à 14, dans lequel la caractérisation d'un déséquilibre sur le débit d'eau alimentaire (DE) d'un générateur de vapeur (8) est réalisée en fonction du niveau d'eau de ce générateur de vapeur (8), en particulier en fonction d'un écart entre un niveau d'eau mesuré (NVmes) de ce générateur de vapeur (8) et une consigne de niveau d'eau (NVcons).

16. Procédé de surveillance selon l'une quelconque des revendications 11 à 15, dans lequel la caractérisation d'un déséquilibre sur le débit de purge d'un générateur de vapeur (8) est réalisée en fonction du débit d'eau alimentaire de ce générateur de vapeur (8), en particulier en fonction d'un écart entre le débit d'eau alimentaire mesuré (DEmes) de ce générateur de vapeur (8) et le débit d'eau alimentaire moyen (DEavg) de l'ensemble des générateurs de vapeur (8).

17. Système de surveillance d'une centrale nucléaire comprenant des capteurs pour la mesure, pour chaque générateur de vapeur (8) des paramètres du jeu de paramètres représentatifs, et une unité électronique de surveillance (60) configurée pour la mise en œuvre d'un procédé de surveillance selon l'une quelconque des revendications précédentes à partir des mesures fournies par les capteurs.

18. Produit programme d'ordinateur enregistrable sur une mémoire ou un support de données informatique et exécutable par un processeur ou un ordinateur, le produit programme d'ordinateur comprenant des instructions de code logiciel pour la mise en œuvre d'un procédé de surveillance selon l'une quelconque des revendications 1 à 16.

## Patentansprüche

1. Verfahren zur Überwachung eines Kernkraftwerks (2), das von einem Überwachungssystem (40) durchgeführt wird, wobei das Kernkraftwerk (2) einen Primärkreislauf (4), einen Sekundärkreislauf (6), einen Kernreaktor (10), der in dem Primärkreislauf (4) angeordnet ist, um Wasser zu erhitzen, das in dem Primärkreislauf (4) zirkuliert, und N Dampferzeuger (8), die angeordnet sind, um Wärme von dem Primärkreislauf (4) zu dem Sekundärkreislauf (6) zu übertragen, indem sie Dampf in dem Sekundärkreislauf (6) generieren, besitzt, wobei N eine ganze Zahl größer oder gleich 2 ist, das Überwachungssystem (40) umfassend Sensoren, um für jeden Dampferzeuger (8) Parameter aus einem Satz von Parametern zu messen, die repräsentativ für den Betrieb des Dampferzeugers (8) sind, **dadurch gekennzeichnet, dass** das Überwachungsverfahren für mindestens einen der Parameter des Satzes repräsentativer Parameter und für jeden Dampferzeuger (8) Folgendes umfasst:
- Bestimmen, abhängig von den Messungen, die von den Sensoren bereitgestellt werden, einer Abweichung zwischen einem gemessenen Wert des Parameters für diesen Dampferzeuger (8) und dem Durchschnittswert dieses Parameters für alle Dampferzeuger (8), um ein Ungleichgewicht dieses Parameters an dem Dampferzeuger (8) zu erkennen; und
- Charakterisieren des Ungleichgewichts, das diesen Parameter dieses Dampferzeugers (8) beeinflusst, abhängig von einem oder mehreren anderen Parametern des Satzes repräsentativer Parameter, um ein Signal für ein physikalisches Problem zu erzeugen, das indikativ für das Vorhandensein eines physikalischen Problems an dem von dem Ungleichgewicht betroffenen Dampferzeuger (8) ist, oder ein Messabweichungssignal, das indikativ für eine Abweichung der Messung des betrachteten Parameters an dem von dem Ungleichgewicht betroffenen Dampferzeuger (8) ist.

2. Überwachungsverfahren nach Anspruch 1, wobei für mindestens einen der Parameter des Satzes repräsentativer Parameter die Charakterisierung eines Ungleichgewichts des Parameters abhängig von einer Abweichung zwischen einem gemessenen Wert dieses anderen Parameters für den betrachteten Dampferzeuger (8) und einem Referenzwert dieses anderen Parameters für die Gesamtheit der Dampferzeuger (8) für mindestens einen oder jeden dieser anderen Parameter durchgeführt wird, wobei der Referenzwert ausgewählt ist aus einem Durchschnittswert dieses anderen Parameters und einem Sollwert dieses anderen Parameters.

3. Überwachungsverfahren nach Anspruch 1 oder 2, wobei mindestens eine oder jede Abweichung zwischen einem gemessenen Wert und einem Referenzwert eines Parameters mit einem oder mehreren Vergleichsschwellenwerten verglichen wird, um ein Ungleichgewicht bei diesem Parameter zu erkennen oder um ein Ungleichgewicht bei einem anderen Parameter zu erkennen, wobei der Referenzwert ausgewählt ist aus einem Durchschnittswert und einem Sollwert dieses Parameters.

4. Überwachungsverfahren nach einem der vorherigen Ansprüche, wobei für mindestens einen der Parameter des Satzes repräsentativer Parameter, die Charakterisierung des Ungleichgewichts des Parameters an dem betrachteten Dampferzeuger (8) Folgendes umfasst:
- Ausgeben eines Signals für physikalisches Problem, wenn die Abweichung zwischen dem gemessenen Wert und dem berechneten Durchschnittswert für diesen Parameter kleiner als ein mit diesem Parameter assoziierter unterer Schwellenwert oder größer als ein mit diesem Parameter assoziierter oberer Schwellenwert ist, und wenn die Abweichung zwischen dem gemessenen Wert und einem Referenzwert eines anderen Parameters des Satzes repräsentativer Parameter, vorzugsweise ausgewählt aus dem für diesen anderen Parameter berechneten Durchschnittswert und einem Sollwert dieses anderen Parameters, optional gefiltert mit Hilfe eines Phasenvoreilungsfilters, kleiner als ein mit diesem anderen Parameter assoziierter unterer Schwellenwert oder größer als ein mit diesem anderen Parameter assoziierter oberer Schwellenwert ist; und/oder
- Ausgeben eines Signals für Messabweichung, wenn die für diesen Parameter berechnete Abweichung unter einem mit diesem Parameter assoziierten unteren Schwellenwert oder über einem diesem Parameter assoziierten oberen Schwellenwert ist, und wenn die Abweichung zwischen dem gemessenen Wert und einem Referenzwert eines anderen Parameters des Satzes repräsentativer Parameter, vorzugsweise ausgewählt aus dem für den anderen Parameter berechneten Durchschnittswert und einem Sollwert des anderen Parameters, optional gefiltert mit einem Phasenvoreilungsfilter, nicht kleiner als der mit diesem anderen Parameter assoziierte untere Schwellenwert und nicht größer als der mit diesem anderen Parameter assoziierte obere Schwellenwert ist.

5. Überwachungsverfahren nach einem der vorherigen Ansprüche, wobei für jeden Dampferzeuger (8) und für mindestens einen der Parameter des Satzes repräsentativer Parameter, die Charakterisierung eines Ungleichgewichts dieses Parameters an diesem Dampferzeuger (8) Folgendes umfasst:
- Ausgeben eines ersten Signals für physikalisches Problem, wenn die Abweichung zwischen dem gemessenen Wert und dem berechneten Durchschnittswert für diesen Parameter kleiner als ein negativer unterer Schwellenwert ist und wenn die Abweichung zwischen dem gemessenen Wert und einem Referenzwert eines anderen Parameters des Satzes repräsentativer Parameter, der vorzugsweise aus dem berechneten Durchschnittswert für diesen anderen Parameter und einem Sollwert dieses anderen Parameters ausgewählt ist, optional gefiltert mittels eines Phasenvoreilungsfilters, kleiner als ein negativer unterer Schwellenwert ist;
- Ausgeben eines ersten Signals für Messabweichung, wenn die Abweichung zwischen dem gemessenen Wert und dem berechneten Durchschnittswert für diesen Parameter kleiner als der negative untere Schwellenwert ist und wenn die Abweichung zwischen dem gemessenen Wert und dem Referenzwert für den anderen Parameter, optional gefiltert mittels eines Phasenvoreilungsfilters, nicht kleiner als der negative untere Schwellenwert ist;
- Ausgeben eines zweiten Signals für physikalisches Problem, wenn die Abweichung zwischen dem gemessenen Wert und dem berechneten Durchschnittswert für diesen Parameter größer als ein positiver oberer Schwellenwert ist und wenn die Abweichung zwischen dem gemessenen Wert und dem Referenzwert für den anderen Parameter, optional gefiltert mittels eines Phasenvoreilungsfilters, größer als ein positiver oberer Schwellenwert ist; und/oder
- Ausgeben eines zweiten Signals für Messabweichung, wenn die Abweichung zwischen dem gemessenen Wert und dem berechneten Durchschnittswert für diesen Parameter größer als ein positiver oberer Schwellenwert ist und wenn die Abweichung zwischen dem gemessenen Wert und dem Referenzwert für den anderen Parameter, optional gefiltert mittels eines Phasenvoreilungsfilters, nicht größer als der positive obere Schwellenwert ist.

6. Überwachungsverfahren nach einem der vorherigen Ansprüche, für jeden Dampferzeuger (8) und für mindestens einen der Parameter des Satzes repräsentativer Parameter, Ausgeben eines Alarmsignals, wenn die Abweichung zwischen dem gemessenen Wert und einem Referenzwert kleiner als ein unterer Alarmschwellenwert ist, und/oder Ausgeben eines Alarmsignals, wenn die Abweichung zwischen dem gemessenen Wert und dem Referenzwert größer als ein oberer Alarmschwellenwert ist, wobei der Referenzwert ausgewählt ist aus einem Durchschnittswert dieses Parameters und einem Sollwert dieses Parameters.

7. Überwachungsverfahren nach Anspruch 6, wobei die Abweichung zwischen dem gemessenen Wert und dem Referenzwert mit einem Phasenvoreilungsfilter gefiltert wird, bevor sie mit dem unteren Alarmschwellenwert verglichen wird und/oder bevor sie mit dem oberen Alarmschwellenwert verglichen wird.

8. Überwachungsverfahren nach Anspruch 7, wobei die Charakterisierung eines Ungleichgewichts bei mindestens einem oder jedem der Parameter des Satzes repräsentativer Parameter die Berücksichtigung eines Alarmsignals umfasst, das für einen anderen Parameter des Satzes repräsentativer Parameter ausgegeben wird.

9. Überwachungsverfahren nach einem der vorherigen Ansprüche, für jeden Dampferzeuger (8) und für mindestens einen der Parameter des Satzes repräsentativer Parameter, Ausgeben eines Abweichungssignals, wenn die Abweichung zwischen dem gemessenen Wert und einem Referenzwert dieses Parameters kleiner ist als ein unterer Abweichungsschwellenwert und/oder Ausgeben eines Abweichungssignals, wenn die Abweichung zwischen dem gemessenen Wert und dem Referenzwert dieses Parameters größer ist als ein oberer Abweichungsschwellenwert, wobei der Referenzwert ausgewählt ist aus einem Durchschnittswert dieses Parameters und einem Sollwert dieses Parameters.

10. Überwachungsverfahren nach Ansprüche 6 und 9, wobei die Charakterisierung eines Ungleichgewichts mindestens eines der Parameter eines Dampferzeugers abhängig von einem für diesen Parameter ausgegebenen Abweichungssignal und einem für mindestens einen anderen für die Charakterisierung berücksichtigten Parameter ausgegebenen Alarm- oder Abweichungssignal erfolgt.

11. Überwachungsverfahren nach einem der vorherigen Ansprüche, wobei für jeden Dampferzeuger der Satz repräsentativer Parameter einen oder mehrere der folgenden Parameter umfasst: den Dampfdurchsatz (DV), den Dampfdruck (PV), den Speisewasserdurchsatz (DE), die Speisewassertemperatur (TE), den Spüldurchsatz (DP), den Wasserstand in flüssigem Zustand (NV) und die Primärleistung (P1).

12. Überwachungsverfahren nach Anspruch 11, wobei die Charakterisierung eines Ungleichgewichts auf den Dampfdruck eines Dampferzeugers (8) abhängig von dem Dampfdurchsatz und der Primärleistung erfolgt, insbesondere abhängig von einer Abweichung zwischen dem gemessenen Dampfdurchsatz (DVmes) dieses Dampferzeugers (8) und dem durchschnittlichen Dampfdurchsatz (DVavg) der Dampferzeuger (8) und einer Abweichung zwischen der gemessenen Primärleistung (P1mes) dieses Dampferzeugers (8) und der durchschnittlichen Primärleistung (P1avg) für die Gesamtheit der Dampferzeuger (8).

13. Überwachungsverfahren nach Anspruch 11 oder Anspruch 12, wobei die Charakterisierung eines Ungleichgewichts auf den Dampfdurchsatz eines Dampferzeugers (8) abhängig von dem Dampfdruck und der Primärleistung erfolgt, insbesondere abhängig von einer Abweichung zwischen dem gemessenen Dampfdruck (PVmes) dieses Dampferzeugers (8) und dem durchschnittlichen Dampfdruck (PVavg) aller Dampferzeuger (8) und von einer Abweichung zwischen der gemessenen Primärleistung (P1mes) dieses Dampferzeugers (8) und der durchschnittlichen Primärleistung (P1avg) der Dampferzeuger (8).

14. Überwachungsverfahren nach einem der Ansprüche 11 bis 13, wobei die Charakterisierung eines Ungleichgewichts auf die Speisewassertemperatur (TE) eines Dampferzeugers (8) abhängig von der Primärleistung erfolgt, insbesondere abhängig von einer Abweichung zwischen der gemessenen Primärleistung (P1mes) dieses Dampferzeugers (8) und der durchschnittlichen Primärleistung (P1avg) aller Dampferzeuger (8).

15. Überwachungsverfahren nach einem der Ansprüche 11 bis 14, wobei die Charakterisierung eines Ungleichgewichts auf den Speisewasserdurchsatz (DE) eines Dampferzeugers (8) abhängig von dem Wasserstand dieses Dampferzeugers (8) erfolgt, insbesondere abhängig von einer Abweichung zwischen einem gemessenen Wasserstand (NVmes) dieses Dampferzeugers (8) und einem Wasserstandvorgabewert (NVcons).

16. Überwachungsverfahren nach einem der Ansprüche 11 bis 15, wobei die Charakterisierung eines Ungleichgewichts auf den Spüldurchsatz eines Dampferzeugers (8) abhängig vom Speisewasserdurchsatz dieses Dampferzeugers (8) erfolgt, insbesondere abhängig von einer Abweichung zwischen dem gemessenen Speisewasserdurchsatz (DEmes) dieses Dampferzeugers (8) und dem durchschnittlichen Speisewasserdurchsatz (DEavg) aller Dampferzeuger (8).

17. Überwachungssystem für ein Kernkraftwerk, umfassend Sensoren zum Messen, für jeden Dampferzeuger (8), der Parameter des Satzes repräsentativer Parameter, und einer elektronischen Überwachungseinheit (60), die zum Durchführen eines Überwachungsverfahrens nach einem der vorherigen Ansprüche anhand der von den Sensoren bereitgestellten Messungen konfiguriert ist.

18. Computerprogrammprodukt, das auf einem Computerspeicher oder Datenträger speicherbar und von einem Prozessor oder Computer ausführbar ist, wobei das Computerprogrammprodukt Softwarecode-Anweisungen zum Durchführen eines Überwachungsverfahrens nach einem der Ansprüche 1 bis 16 umfasst.

## Claims

1. A monitoring method a nuclear plant (2) implemented by a monitoring system (40), the nuclear plant (2) having a primary circuit (4), a secondary circuit (6), a nuclear reactor (10) arranged in the primary circuit (4) to heat water circulating in the primary circuit (4), and N steam generators (8) arranged to transfer heat from the primary circuit (4) to the secondary circuit (6) by generating steam in the secondary circuit (6), N being an integer equal to or greater than 2, the monitoring system (40) comprising sensors for measuring, for each steam generator (8), parameters of a set of parameters representative of the operation of the steam generator (8), **characterized in that** the monitoring method comprises, for at least one of the parameters of the set of representative parameters, and for each steam generator (8):
- determining, as a function of measurements supplied by the sensors, a deviation between a measured value of the parameter for this steam generator (8) and the average value of this parameter for all the steam generators (8), for detecting an imbalance of this parameter on the steam generator (8); and
- characterizing the imbalance affecting this parameter of this steam generator (8) as a function of one or more other parameter(s) of the set of representative parameters, so as to generate a physical problem signal indicative of the presence of a physical problem on the steam generator (8) affected by the imbalance or a measurement drift signal indicative of a drift in the measurement of the parameter under consideration on the steam generator (8) affected by the imbalance.

2. The monitoring method according to claim 1, wherein, for at least one of the parameters of the set of representative parameters, the characterization of an imbalance of the parameter is carried out as a function, for at least one or each of said other parameter(s), of a deviation between a measured value of this other parameter for the steam generator (8) under consideration and a reference value of this other parameter for all the steam generators (8), the reference value being chosen from among an average value of this other parameter and a setpoint value of this other parameter.

3. The monitoring method according to claim 1 or 2, comprising the comparison of at least one of or each deviation between a measured value and a reference value of a parameter with one or more comparison thresholds, to detect an imbalance on this parameter or to detect an imbalance on another parameter, the reference value being chosen from among an average value and a setpoint value of this parameter.

4. The monitoring method according to any one of the preceding claims, wherein, for at least one of the parameters of the set of representative parameters, characterization of the imbalance of the parameter on the steam generator (8) under consideration comprises :
- the emission of a physical problem signal if the deviation between the measured value and the calculated average value for this parameter is less than a lower threshold associated with this parameter or greater than an upper threshold associated with this parameter, and if the deviation between the measured value and a reference value of another parameter of the set of representative parameters, preferably chosen from among the average value calculated for this other parameter and a setpoint value of this other parameter, possibly filtered using a phase advance filter, is less than a lower threshold associated with this other parameter or greater than an upper threshold associated with this other parameter ; and/or
- the emission of a measurement drift signal if the deviation calculated for this parameter is less than a lower threshold associated with this parameter or greater than an upper threshold associated with this parameter, and if the deviation between the measured value and a reference value of another parameter of the set of representative parameters, preferably chosen from among the average value calculated for said other parameter and a setpoint value of said other parameter, possibly filtered using a phase advance filter, is not less than the lower threshold associated with this other parameter nor greater than the upper threshold associated with this other parameter.

5. The monitoring method according to any one of the preceding claims, wherein, for each steam generator (8), and for at least one of the parameters of the set of representative parameters, characterization of an imbalance of this parameter on this steam generator (8) comprises :
- the emission of a first physical problem signal if the deviation between the measured value and the calculated average value for this parameter is less than a negative lower threshold, and if the deviation between the measured value and a reference value of another parameter of the set of representative parameters, preferably chosen from among the calculated average value for this other parameter and a setpoint value of this other parameter, possibly filtered using a phase advance filter, is less than a negative lower threshold;
- the emission of a first measurement drift signal if the deviation between the measured value and the calculated average value for this parameter is less than the negative lower threshold, and if the deviation between the measured value and the reference value for the other parameter, possibly filtered using a phase advance filter, is not less than the negative lower threshold;
- the emission of a second physical problem signal if the deviation between the measured value and the calculated average value for this parameter is greater than a positive upper threshold, and if the deviation between the measured value and the reference value for the other parameter, possibly filtered using a phase advance filter, is greater than a positive upper threshold; and/or
- the emission of a second measurement drift signal if the deviation between the measured value and the calculated average value for this parameter is greater than a positive upper threshold and if the deviation between the measured value and the reference value for the other parameter, possibly filtered using a phase advance filter, is not greater than the positive upper threshold.

6. The monitoring method according to any one of the preceding claims, for each steam generator (8) and for at least one of the parameters of the set of representative parameters, the emission of an alarm signal if the deviation between the measured value and a reference value is less than a lower alarm threshold and/or the emission of an alarm signal if the deviation between the measured value and the reference value is greater than an upper alarm threshold, the reference value being chosen from among an average value of this parameter and a setpoint value of this parameter.

7. The monitoring method according to claim 6, wherein the deviation between the measured value and the reference value is filtered using a phase advance filter before being compared with the lower alarm threshold and/or before being compared with the upper alarm threshold.

8. The monitoring method according to claim 7, wherein the characterization of an imbalance on at least one of or each of the parameters of the set of representative parameters comprises taking into account an alarm signal emitted for another parameter of the set of representative parameters.

9. The monitoring method according to any one of the preceding claims, for each steam generator (8) and for at least one of the parameters of the set of representative parameters, the emission of a deviation signal if the deviation between the measured value and a reference value of this parameter is less than a lower deviation threshold and/or the emission of a deviation signal if the deviation between the measured value and the reference value of this parameter is greater than an upper deviation threshold, the reference value being chosen from among an average value of this parameter and a setpoint value of this parameter.

10. The monitoring method according to claims 6 and 9, wherein the characterization of an imbalance of at least one of the parameters of a steam generator is carried out as a function of a deviation signal emitted for this parameter and of an alarm or deviation signal emitted for at least one other parameter taken into account for the characterization.

11. The monitoring method according to any one of the preceding claims, wherein, for each steam generator, the set of representative parameters comprises one or more of the following parameters: steam flow (DV), steam pressure (PV), feed water flow (DE), feed water temperature (TE), purge flow (DP), water level in liquid state (NV) and primary power (P1).

12. The monitoring method according to claim 11, wherein the characterization of an imbalance on the steam pressure of a steam generator (8) is carried out as a function of the steam flow and the primary power, in particular as a function of a deviation between the measured steam flow (DVmes) of this steam generator (8) and the average steam flow (DVavg) of the steam generators (8), and a deviation between the measured primary power (P1mes) of this steam generator (8) and the average primary power (P1avg) for all the steam generators (8).

13. The monitoring method according to claim **11** or claim 12, wherein the characterization of an imbalance on the steam flow of a steam generator (8) is carried out as a function of the steam pressure and the primary power, in particular as a function of a deviation between the measured steam pressure (PVmes) of this steam generator (8) and the average steam pressure (PVavg) of all the steam generators (8), and a deviation between the measured primary power (P1mes) of this steam generator (8) and the average primary power (P1avg) of all the steam generators (8).

14. The monitoring method according to any one of claims **11** to 13, wherein the characterization of an imbalance on the feed water temperature (TE) of a steam generator (8) is carried out as a function of the primary power, in particular as a function of a deviation between the measured primary power (P1mes) of this steam generator (8) and the average primary power (P1avg) of all the steam generators (8).

15. The monitoring method according to any one of claims **11** to 14, wherein the characterization of an imbalance on the feed water flow (DE) of a steam generator (8) is carried out as a function of the water level of this steam generator (8), in particular as a function of a deviation between a measured water level (NVmes) of this steam generator (8) and a water level setpoint (NVcons).

16. The monitoring method according to any one of claims **11** to 15, wherein the characterization of an imbalance on the purge flow of a steam generator (8) is carried out as a function of the feed water flow of this steam generator (8), in particular as a function of a deviation between the measured feed water flow (DEmes) of this steam generator (8) and the average feed water flow (DEavg) of all the steam generators (8).

17. A system for monitoring a nuclear plant comprising sensors for measuring, for each steam generator (8), parameters from the set of representative parameters, and an electronic monitoring unit (60) configured to implement a monitoring method according to any one of the preceding claims on the basis of measurements provided by the sensors.

18. A computer program product recordable on a computer memory or data carrier and executable by a processor or computer, the computer program product comprising software code instructions for implementing a monitoring method according to any one of the claims 1 to 16.
